# EUROPÄISCHE PATENTSCHRIFT

(11) **EP 4 530 758 B1**
(45) Veröffentlichungstag und Bekanntmachung des Hinweises auf die Patenterteilung: **03.09.2025**
(21) Anmeldenummer: 23200689.0
(22) Anmeldetag: 28.09.2023
(51) Int. Cl.: G05B 9/02, G05B 19/418

(54) **ÜBERWACHUNG MINDESTENS EINER MASCHINE**
MONITORING AT LEAST ONE MACHINE
SURVEILLANCE D'AU MOINS UNE MACHINE

(43) Veröffentlichungstag der Anmeldung: 02.04.2025
(73) Patentinhaber: SICK AG, 79183 Waldkirch (DE)
(72) Erfinder: Hofmann, Dr. Christoph, 79108 Freiburg (DE); Arockiaraj, Alfred, 79183 Waldkirch (DE)

(56) Entgegenhaltungen:
- EP-A1- 4 148 517
- SATOH MINETO: "Digital Twin-based Collision Avoidance System for Autonomous Excavator with Automatic 3D LiDAR Sensor Calibration", 2022 IEEE 18TH INTERNATIONAL CONFERENCE ON AUTOMATION SCIENCE AND ENGINEERING (CASE), IEEE, 20 August 2022 (2022-08-20), pages 1267 - 1273, XP034216073, DOI: 10.1109/CASE49997.2022.9926653
- AKBARIAN FATEMEH ET AL: "Synchronization in Digital Twins for Industrial Control Systems", ARXIV.ORG, 5 June 2020 (2020-06-05), Ithaca, pages 1 - 4, XP093138221, Retrieved from the Internet <URL:https://lup.lub.lu.se/search/files/161762635/2006.03447.pdf> [retrieved on 20240306], DOI: 10.48550/arxiv.2006.03447
- HINZE CHRISTOPH ET AL: "Towards Real-Time Capable Simulations with a Containerized Simulation Environment", 2018 25TH INTERNATIONAL CONFERENCE ON MECHATRONICS AND MACHINE VISION IN PRACTICE (M2VIP), IEEE, 20 November 2018 (2018-11-20), pages 1 - 6, XP033492739, DOI: 10.1109/M2VIP.2018.8600827
- MAAYAN GILAD DAVID: "Best Practices for Running Stateful Applications on Kubernetes - InfoQ", 9 March 2022 (2022-03-09), pages 1 - 13, XP093138234, Retrieved from the Internet <URL:https://www.infoq.com/articles/kubernetes-stateful-applications/> [retrieved on 20240306]

## Beschreibung

Die Erfindung betrifft ein Verfahren zur Überwachung mindestens einer Maschine nach dem Oberbegriff von Anspruch 1 sowie eine entsprechende Sicherheitsvorrichtung.

Die Sicherheitstechnik befasst sich mit dem Personenschutz beziehungsweise der Vermeidung von Unfällen mit Maschinen. Mit einem oder mehreren Sensoren wird die Maschine beziehungsweise deren Umgebung überwacht, um sie bei drohender Gefahr rechtzeitig in einen sicheren Zustand zu versetzen. Eine typische herkömmliche sicherheitstechnische Lösung überwacht mit dem mindestens einen Sensor, etwa mittels eines Laserscanners, ein Schutzfeld, das während des Betriebs der Maschine vom Bedienpersonal nicht betreten werden darf. Erkennt der Sensor einen unzulässigen Schutzfeldeingriff, wie ein Bein einer Bedienperson, so löst er einen Nothalt der Maschine aus. Es gibt alternative Schutzkonzepte, wie das sogenannte Speed-and-Separation-Monitoring, bei dem die Abstände und Geschwindigkeiten der erfassten Objekte in der Umgebung bewertet und im Gefahrenfalle reagiert wird.

In der Sicherheitstechnik ist eine besondere Verlässlichkeit gefordert, und deshalb sind hohe Sicherheitsanforderungen zu erfüllen, beispielsweise die Norm EN13849 für Maschinensicherheit und die Gerätenorm EN61496 für berührungslos wirkende Schutzeinrichtungen (BWS). Einige typische Maßnahmen dafür sind eine sichere elektronische Auswertung durch redundante, diversitäre Elektronik oder verschiedene Funktionsüberwachungen, etwa die Überwachung der Verschmutzung optischer Bauteile einschließlich einer Frontscheibe. Etwas allgemeiner sind wohldefinierte Fehlerbeherrschungsmaßnahmen nachzuweisen, damit mögliche sicherheitskritische Fehler entlang der Signalkette von dem Sensor über die Auswertung bis zur Einleitung der sicherheitstechnischen Reaktion vermieden oder kontrolliert werden.

Aufgrund der hohen Anforderungen an Hardware und Software in der Sicherheitstechnik werden bislang in erster Linie monolithische Architekturen eingesetzt, mit spezifisch entwickelter Hardware, die Redundanzen und Funktionsüberwachung durch Mehrkanaligkeit und Testmöglichkeiten vorsieht. Entsprechend werden Nachweise korrekter Algorithmen etwa nach IEC TS 62998, IEC-61508-3 geführt, und der Entwicklungsprozess der Software unterliegt permanenten strengen Tests und Überprüfungen. Ein Beispiel hierfür ist ein Sicherheitslaserscanner wie beispielsweise erstmals aus DE 43 40 756 A1 bekannt und in seinen Grundzügen bis heute weit verbreitet eingesetzt. Dort ist die gesamte Auswertungsfunktionalität integriert, einschließlich der Lichtlaufzeitmessung zur Abstandsbestimmung und der Objekterfassung in konfigurierten Schutzfeldern. Das Ergebnis ist ein fertig ausgewertetes binäres Absicherungssignal an einem zweikanaligen Ausgang (OSSD, Output Signal Switching Device) des Laserscanners, das im Falle eines Schutzfeldeingriffs die Maschine stoppt. Auch wenn sich dieses Konzept bewährt hat, bleibt es unflexibel, da Änderungen praktisch nur durch Neuentwicklung eines Nachfolgemodells des Laserscanners möglich sind.

In einigen herkömmlichen Sicherheitsanwendungen wird zumindest ein Teil der Auswertung aus dem Sensor in eine programmierbare Steuerung ausgelagert (SPS, Speicherprogrammierbare Steuerung). Dafür sind aber besondere Sicherheitssteuerungen erforderlich, die selbst zur Fehlervermeidung und -aufdeckung mehrkanalige Strukturen und dergleichen aufweisen. Sie sind daher kostenaufwändig und bieten vergleichsweise wenig Speicher- und Rechenkapazitäten, die beispielsweise mit einer 3D-Bildverarbeitung völlig überfordert sind. Im Übrigen sind auch Standardsteuerungen oder SPS nur mit bestimmten Sprachen bei zum Teil sehr limitierendem Sprachraum programmierbar. Schon verhältnismäßig einfache Funktionsblöcke bedürfen erheblicher Entwicklungsaufwände und Laufzeitressourcen, so dass deren Implementierung in einer Standardsteuerung, erst recht unter Sicherheitsmaßnahmen wie Redundanzen, bei etwas komplexeren Anwendungen kaum realisierbar sind.

Außerhalb der Sicherheitstechnik gibt es längst sehr viel flexiblere Architekturen. Der monolithische Ansatz ist dort seit langem in mehreren Schritten moderneren Konzepten gewichen. Die frühere traditionelle Verteilung (Deployment) mit fester Hardware, auf der ein Betriebssystem die einzelnen Anwendungen koordiniert, hat zwar weiterhin ihre Berechtigung in Standalone-Geräten, genügt aber in einer vernetzten Welt längst nicht mehr. Der Grundgedanke in der Weiterentwicklung war das Einziehen von zusätzlichen Schichten, die von der konkreten Hardware immer weiter abstrahieren.

Ein erster Schritt sind die sogenannten virtuellen Maschinen, wo die zusätzliche Schicht als Hypervisor oder Virtual Machine Monitor bezeichnet ist. Solche Ansätze werden inzwischen auch zaghaft in der Sicherheitstechnik verfolgt. So bietet etwa die EP 3 179 278 B1 in einem Sicherheitssensor eine geschützte Umgebung an, um dem Anwender zu erlauben, eigene Programmbausteine auf dem Sicherheitssensor ablaufen zu lassen. Die Programmbausteine sind dann aber sorgfältig von der Sicherheitsfunktionalität getrennt und tragen dazu nichts bei.

Eine weitergehende Abstraktion basiert auf sogenannten Containern (Container-Virtualisierung, Containering). Ein Container ist quasi eine kleine virtuelle Kapsel für eine Softwareanwendung, die eine vollständige Umgebung für deren Ablauf einschließlich Speicherbereichen, Bibliotheken und sonstigen Abhängigkeiten bietet. Die zugehörige abstrahierende Schicht oder Laufzeitumgebung wird container runtime genannt. Damit kann die Softwareanwendung unabhängig von der praktisch beliebigen Hardware entwickelt werden, auf der sie später abläuft. Die Containertechnik erlaubt somit auf eine schlanke, übertragbare Weise, Anwendungen isoliert und reproduzierbar in nahezu beliebigen Umgebungen ablaufen zu lassen. Container werden häufig mit Hilfe von Docker umgesetzt, bekannt sind weiterhin Podman oder LXC (Linux Containers).

In einer modernen loT-Architektur (Internet of Things, Industrial Internet of Things) wird eine Vielzahl von Containern mit unterschiedlichsten Softwareanwendungen zusammengeführt. Diese Container müssen geeignet koordiniert werden, was in diesem Zusammenhang als Orchestrieren bezeichnet wird und wofür ein sogenannter orchestration layer als weitere Abstraktion hinzukommt. Eine Container-Orchestrierungsplattform ist ein Werkzeug, um die Verteilung (Deployment), Verwaltung, Skalierung und Vernetzung von Containern zu automatisieren. Dank der Orchestrierung können Entwickler statt einer mühsamen Einzelverwaltung von Containern auf Ebene der Anwendung denken. Es gibt weitere Werkzeuge, mit denen die gewünschten Systemzustände auf einer höheren, verständlicheren Ebene vorgegeben werden. Damit können auch sehr große Projekte mit vielen tausenden Containern und noch mehr umgesetzt werden. Für die Container-Orchestrierung setzt sich zunehmend Kubernetes durch. Daneben sind Alternativen wie Docker Swarm als Erweiterung von Docker sowie OpenShift, Rancher, Google Container Engine (GKE) oder Amazon Elastic Kubernetes Service (Amazon EKS) zu nennen.

Der Einsatz solcher modernen, abstrahierenden Architekturen in der Sicherheitstechnik scheitert bislang an den hohen Hürden der Sicherheitsnormen und der entsprechend konservativen Herangehensweise im Anwendungsfeld der funktionalen Sicherheit. Allgemein im industriellen Umfeld werden Containertechnologien durchaus verfolgt, und beispielsweise in der Automobilindustrie gibt es Pläne für den Einsatz von Kubernetes-Architekturen, und auch die Luftwaffe verfolgt derlei Ansätze. Dies alles zielt aber nicht auf die funktionale Sicherheit und löst somit die genannten Probleme nicht.

Zwar ist eine hohe Verfügbarkeit auch in einer üblichen loT-Welt erwünscht, aber diese Form der Ausfallsicherheit ist längst noch nicht mit dem vergleichbar, was die Sicherheitsnormen fordern. Für den Sicherheitstechniker sind daher Edge- oder Cloudanwendungen für eine normgerechte Sicherheit bisher undenkbar. Es widerspricht dem verbreiteten Denken, für reproduzierbare Bedingungen zu sorgen und sich gegen alle unter diesen Bedingungen vorstellbaren Möglichkeiten einer Fehlfunktion zu wappnen. Eine weitgehende Abstraktion schafft eine zusätzliche Ungewissheit, die bislang mit den Sicherheitsanforderungen unvereinbar erscheint.

In der Industrie zeigt sich noch ein weiterer Trend, nämlich die Virtualisierung. Hiermit ist an dieser Stelle nicht Abstraktion im Sinne von Hardwareunabhängigkeit gemeint wie bei Containern oder Orchestrierung, sondern die Übertragung realer Szenarien in die virtuelle Welt. Insbesondere werden Simulationen von Maschinen, Sensoren und ganzen Industrieanlagen geschaffen, bisweilen unter dem Stichwort digitaler Zwilling. Dabei gibt es gerade in jüngerer Zeit massive Fortschritte, die eine sehr realistische, dynamische Simulation zur Laufzeit ermöglichen. Beispielsweise unter Nutzung moderner Physik-Engines schließt sich die Lücke zwischen Simulation und Wirklichkeit (reality gap) immer mehr. Eine Physik-Engine ist in der Lage, physikalische Vorgänge nachzustellen, etwa mit Modellen für die Dynamik starrer oder weicher Körper einschließlich einer Kollisionserkennung oder für die Fluiddynamik.

Es gibt einige Softwaresysteme (Simulation and Virtualization Framework), die eine Übertragung der realen Welt in die simulierte Welt unterstützen und die hier deshalb als Simulationsumgebungen bezeichnet werden. ROS (Robot Operating System) ist trotz seines Namens eher eine Sammlung von Open-Source-Bibliotheken und -Werkzeugen und kein Betriebssystem, sondern vielmehr eine Middleware, die mit verteilten Sensoren und Aktoren (ROS nodes) kommuniziert. Es gibt zahlreiche Zusatzfunktionen, wie rviz für dreidimensionale Ansichten von Robotern und deren Umgebung sowie Sensordaten, ROS Gazebo als Physik-Engine oder Movelt für die Pfadplanung. Weitere bekannte Simulationsumgebungen mit leistungsfähiger Physikengine sind Unity, MuJoCo oder Nvidias Omniverse. Letzteres bindet leistungsstarke Kl-Technologien ein und verfügt über zahlreiche Erweiterungen und Plug-Ins. Insbesondere ist damit auch die Simulation von Personen und deren Bewegungsverhalten möglich.

Vergleicht man beispielsweise die drei Simulationsumgebungen ROS, Unity und Omniverse, so fehlt es Unity und Omniverse an Aufzeichnungsfunktionen für eine spätere beziehungsweise Offline-Weiterverarbeitung und an einer Treiberunterstützung für ältere Hardware. Dafür verfügt ROS jedenfalls für sich allein nicht über eine mit Unity oder Omniverse vergleichbare, leistungsstarke Physik-Engine samt Erzeugung realistischer Ansichten (Rendering). Eine Überwachung oder ein Wiederanlauf im Fehlerfall ist mit keiner der genannten Simulationsumgebungen möglich: Herkömmliche Virtualisierungs- oder Simulationsumgebungen sind nicht sicher, sie genügen nicht den Sicherheitsnormen, und das mag ein Grund sein, warum Virtualisierung in der sehr konservativen Sicherheitstechnik noch so gut wie keine Rolle spielt.

Bei der statusbehafteten Kommunikation (stateful communication) wird ein Protokoll verwendet, das den Kontext erhält, somit Nachrichten früheren Anfragen zuordnet und so eine Nachvollziehbarkeit ermöglicht. Um große Datenmengen in Echtzeit handhaben zu können, arbeitet ein skalierbares Servercluster zusammen. Damit wird die Verarbeitung von Millionen Nachrichten pro Sekunde und die Speicherung von Petabytes an Daten möglich, wobei Redundanzen gegen Verzögerungen und Datenverlust schützen. Apache Kafka ist ein bekanntes Kommunikationssystem dieser Art, das hoch skalierbar, schnell und fehlertolerant ist. Weiter zu nennen sind hier RabbitMQ, ActiveMQ, und RedisStreams.

Die EP 4 040 034 A1 stellt eine Sicherheitsvorrichtung und ein Sicherheitsverfahren zur Überwachung einer Maschine vor, bei dem mit den genannten Container- und Orchestrierungstechnologien die Sicherheitsfunktionalität von der unterliegenden Hardware abstrahiert werden kann. Es werden Logikeinheiten nach Bedarf erzeugt, aufgelöst oder anderer Hardware zugewiesen. Die noch unveröffentlichte europäische Patentanmeldung mit dem Aktenzeichen 22216057.4 verbessert hierfür die Diagnosefunktionalität durch Verwendung von zwei Arten von Nachrichten, nämlich Zustandsnachrichten und Ausführungsnachrichten. Mit Simulation beziehungsweise Virtualisierung im soeben erläuterten Sinne befasst sich aber keines der Dokumente.

Die Arbeit von Satoh, Mineto: "Digital twin-based collision avoidance system for autonomous excavator with automatic 3d lidar sensor calibration", 2022 IEEE 18th International Conference on Automation Science and Engineering (CASE), IEEE, 2022 offenbart eine Absicherung eines Baggers mit einem LiDAR. Dabei wird eine Simulation einer geplanten Bewegung durchgeführt, und die Punktwolke der dabei eingenommenen Positionen wird mit einer von dem LiDAR gemessenen Punktwolke überlagert, um Kollisionen zu erkennen.

Akbarian, Fatemeh, Emma Fitzgerald, and Maria Kihl, "Synchronization in digital twins for industrial control systems", arXiv preprint arXiv:2006.03447, 2020 befassen sich mit der Frage, wie ein digitaler Zwilling mit der Realität in Übereinstimmung gehalten wird.

Hinze, Christoph, et al. "Towards real-time capable simulations with a containerized simulation environment", 2018 25th International Conference on Mechatronics and Machine Vision in Practice (M2VIP). IEEE, 2018 stellt eine containerisierte Simulationsumgebung für einen Roboter vor.

Der Blogbeitrag von Maayan Gilad David vom 9. März 2022, "Best Practices for Running Stateful Applications on Kubernetes - InfoQ", abzurufen unter https://www.infoq.com/articles/kubernetes-stateful-applications befasst sich mit statusbehafteter Kommunikation in Kubernetes.

Es ist daher Aufgabe der Erfindung, ein flexibleres Sicherheitskonzept zu schaffen.

Diese Aufgabe wird durch ein Verfahren und eine Sicherheitsvorrichtung zur Überwachung mindestens einer Maschine nach Anspruch 1 beziehungsweise 12 gelöst. Das Verfahren ist ein computerimplementiertes Verfahren, das in einer nahezu beliebigen Verarbeitungseinheit abläuft. Es werden unten Beispiele für geeignete Hardware genannt. Die überwachte oder abzusichernde Maschine ist zunächst allgemein zu verstehen, es handelt sich beispielsweise um eine Bearbeitungsmaschine, eine Fertigungsstraße, eine Sortieranlage, eine Prozessanlage, einen Roboter oder ein Fahrzeug in zahlreichen Spielarten, wie schienengebunden oder nicht, geführt oder fahrerlos und dergleichen. Insbesondere können sehr viele solche Roboter oder Fahrzeuge vorhanden sein, wie in einer Industrie- oder Logistikhalle. Mindestens ein Sensor liefert Sensordaten zu der Maschine, d.h. Daten über die Maschine selbst, über das, mit dem sie interagiert, oder über deren Umgebung. Die Sensordaten sind zumindest teilweise sicherheitsrelevant, zusätzliche nicht sicherheitsrelevante Sensordaten für Automatisierungs- oder Komfortfunktionen sind denkbar. Die Sensoren können, müssen aber keine sicheren Sensoren sein, die Sicherheit kann erst nachgelagert gewährleistet werden.

In einer Simulation werden die mindestens eine Maschine und der mindestens eine Sensor nachgebildet, insbesondere digitale Zwillinge dazu erzeugt. Diese Simulation kann als Virtualisierung im einleitend erläuterten Sinn aufgefasst werden. Ein Maschinenmodell führt Bewegungen der Maschine durch, und ein Sensormodell erzeugt synthetische Sensordaten. Weitere Simulationsbestandteile insbesondere von Personen im Umfeld der Maschine sind möglich. In der Simulation werden überdies mehrere Sicherheitsfunktionen ausgeführt. Die Sicherheitsfunktionen werten die Simulation sicherheitsgerichtet aus, wobei je nach Sicherheitsfunktion unterschiedliche Aspekte der Simulation bewertet werden, vorzugsweise die synthetischen Sensordaten beziehungsweise Teile davon ausgewertet werden. Die genannten Sicherheitsfunktionen gehören zu der Simulation und könnten daher als virtuelle Sicherheitsfunktionen bezeichnet werden. Die Simulation wird damit zu einer sicheren Virtualisierung beziehungsweise einem sicheren digitalen Zwilling.

Zeigt sich durch die sicherheitsgerichtete Auswertung der Sicherheitsfunktionen, dass eine gefährliche Situation vorliegt, so wird ein Sicherheitssignal an die Maschine ausgegeben, das dort eine Sicherheitsreaktion auslöst. Die Maschine räumt also durch eine geeignete Maßnahme die erkannte Gefahr aus. Je nach Situation wird dies beispielsweise durch ein Verlangsamen, einen besonderen Arbeitsmodus der Maschine beispielsweise mit begrenzter Bewegungsfreiheit oder Bewegungsvielfalt, ein Ausweichen oder ein Anhalten erreicht. Zu beachten ist, dass das Sicherheitssignal an die reale Maschine ausgegeben wird. Vorzugsweise wird auch in dem Maschinenmodell die Sicherheitsreaktion ausgelöst, um die Simulation konsistent zu halten. Gefährliche Situation bedeutet, dass ein Unfall droht, beispielsweise weil ein Mindestabstand zwischen einer Person und der Maschine nicht eingehalten ist. Was konkret eine gefährliche Situation ist, wird in der Sicherheitsfunktion definiert. Wie später noch erläutert, kann sich die gefährliche Situation aus den Sicherheitsfunktionen allein oder in deren Zusammenspiel mit einer Auswertung der realen Sensordaten ergeben.

Die Erfindung geht von dem Grundgedanken aus, die bisherige monolithische Verarbeitung der Simulationsumgebungen aufzubrechen und die einzelnen Sicherheitsfunktionen zu atomisieren. Dafür sind die Sicherheitsfunktionen jeweils einzeln für sich in einem Container implementiert. Damit sind die Sicherheitsfunktionen abgekapselt oder containerisiert und aus ihrem starren, monolithischen Kontext gelöst.

In dieser Beschreibung werden immer wieder die Begriffe Sicherheit oder sicher verwendet. Das ist vorzugsweise jeweils im Sinne einer Sicherheitsnorm zu verstehen. Es wird demnach eine Sicherheitsnorm beispielsweise für Maschinensicherheit, berührungslos wirkende Schutzeinrichtungen oder Unfallvermeidung im Personenschutz erfüllt, oder es werden nochmals etwas anders formuliert durch Normen definierte Sicherheitsniveaus eingehalten, folglich jeweils Fehler bis zu einem in der Sicherheitsnorm oder analog dazu spezifizierten Sicherheitsniveau beherrscht. Einleitend sind einige Beispiele solcher Sicherheitsnormen genannt, wo die Sicherheitsniveaus beispielsweise als Schutzklassen oder Performance Level bezeichnet sind. Die Erfindung ist nicht auf eine bestimmte dieser Sicherheitsnormen festgelegt, die sich in ihrer konkreten Nummerierung und Formulierung regional und im Laufe der Zeit ändern können, nicht aber in ihren grundlegenden Prinzipien zur Schaffung von Sicherheit.

Die Erfindung hat den Vorteil, dass sich die Sicherheitstechnik moderne Virtualisierungen zunutze machen kann. Durch das Aufbrechen bisheriger monolithischer Architekturen wird Flexibilität geschaffen, und außerdem führt es zu schlanken Sicherheitsfunktionen, ohne unnötigen Overhead aus den Simulationsumgebungen mitzuschleifen, den die jeweilige Sicherheitsfunktion gar nicht benötigt. Auf Basis der Container kann, beispielsweise durch Diagnosefunktionen oder sonstige Mechanismen insbesondere aus der EP 4 040 034 A1, nun erstmals eine sichere Virtualisierung geschaffen werden. Bekannte Virtualisierungen sind bereits sehr leistungsfähig, die Simulationen kommen einem "ground truth" der realen Welt schon ziemlich nahe, und dieses Potential wird nun auch der Sicherheitstechnik erschlossen. Schon der erfindungsgemäße Grundansatz ist radikal anders als herkömmlich in der Sicherheitstechnik. Bisher wird eine feste Hardwarestruktur vorgegeben, meist eigens für genau die eingesetzten Sicherheitsfunktionen entwickelt, wobei umgekehrt die Softwarefunktionalität ebenfalls auf genau diese Hardwarestruktur zugeschnitten, dort fest implementiert und getestet wird. Die Erfindung hingegen kommt mit praktisch beliebiger Hardware zurecht, die sich auch immer wieder verändern darf und der so unterschiedliche Architekturen wie ARM oder X86 zugrunde liegen können. Eine heterogene Hardware ist in ihrer Diversität für eine erhöhte Sicherheit sogar erwünscht.

Das Sicherheitssignal wird vorzugsweise ausgegeben, wenn in der Simulation eine gefährliche Situation erkannt wird. In dieser Ausführungsform wird der Simulation so weit vertraut, dass bereits eine dort, also rein virtuell erkannte gefährliche Situation ausreicht, um in der realen Welt einzugreifen. Das bedeutet noch nicht zwangsläufig, dass die Simulation das einzige Mittel der Absicherung ist. Fehlerhafte Entscheidungen aus der Simulation heraus würden aber zumindest die Verfügbarkeit beeinträchtigen, weil unnötig eine Sicherheitsreaktion der Maschine und damit ein Produktivitätsverlust ausgelöst wird.

Bevorzugt werden mit mindestens einer realen Sicherheitsfunktion die Sensordaten des Sensors ausgewertet, wobei das Sicherheitssignal ausgegeben wird, wenn eine Sicherheitsfunktion der Simulation und die reale Sicherheitsfunktion zu inkonsistenten Ergebnissen kommen. Die reale Sicherheitsfunktion ist so benannt, weil sie nicht synthetische, sondern reale Sensordaten auswertet. Die bisher genannten Sicherheitsfunktionen gehören in die Virtualisierung oder Simulation könnten entsprechend auch als virtuelle Sicherheitsfunktion bezeichnet werten. Mittels der realen Sicherheitsfunktion wird eine zweikanalige Struktur etabliert, mit einem Kanal der mindestens einen realen Sicherheitsfunktion, wie bisher üblich, und einem zweiten Kanal der Simulation beziehungsweise der virtuellen Sicherheitsfunktionen. Vorzugsweise gibt es zu der realen Sicherheitsfunktion eine diese nachahmende virtuelle Sicherheitsfunktion. Bevorzugt sind alle Sicherheitsfunktionen sowohl in der realen als auch in der virtuellen Welt etabliert, noch bevorzugter in einer Eins-zu-Eins-Beziehung. Es kann dann direkt verglichen werden, ob sich die realen und virtuellen Sicherheitsfunktionen über die Beurteilung einer gefährlichen Situation einig sind oder nicht, somit ist eine durchgehende diversitäre Redundanz geschaffen. Im Falle einer gegenseitigen Abweichung wird das Sicherheitssignal ausgegeben. Abweichungen innerhalb einer Toleranz, die keine Personen gefährdet, können ohne Ausgabe eines Sicherheitssignals hingenommen werden, etwa geringfügige Positionsabweichungen eines Maschinenteils oder einer Person. Die mindestens eine reale Sicherheitsfunktion ist vorzugsweise in eine den virtuellen Sicherheitsfunktionen vergleichbare Architektur eingebunden, also ebenfalls containerisiert beziehungsweise orchestriert, wie beispielsweise in EP 4 040 034 A1 oder auch später in der Beschreibung erläutert. In Zusammenfassung dieses Absatzes und des vorhergehenden Absatzes kann die Simulation auf zweierlei Arten zur Sicherheit beitragen: Es wird allein virtuell eine gefährliche Situation erkannt, oder die Simulation kann eine reale Sicherheitsfunktion nicht bestätigen oder plausibilisieren.

Mit der jeweiligen Sicherheitsfunktion ist vorzugsweise in deren Container eine Simulationsumgebung implementiert. Die Simulationsumgebung beziehungsweise das Virtualization Framework wird somit mit containerisiert, und zwar vorzugsweise nur im Umfang der tatsächlich für die jeweilige Sicherheitsfunktion erforderlichen Funktionalität. Das sorgt für eine schlanke Implementierung ohne einen ungeheuren Overhead durch zahlreiche ungenutzte Funktionen der meist sehr mächtigen und umfangreichen Sicherheitsumgebung. In der Einleitung sind Beispiele für eine Simulationsumgebung genannt, insbesondere ROS, Unity oder NVidia Omniverse.

Die Sicherheitsfunktionen werden vorzugsweise in jeweils einer von mehreren verschiedenen Simulationsumgebungen ausgeführt. Es gibt also mehrere Simulationsumgebungen, und jede Sicherheitsfunktion nutzt eine für sich passende Simulationsumgebung. Dadurch können die zu einem guten Teil komplementären Vorteile unterschiedlicher Simulationsumgebungen optimal ausgenutzt werden. Besonders bevorzugt wird dies mit der Containerisierung einer Sicherheitsfunktion samt Simulationsumgebung des Vorabsatzes kombiniert. Jede Sicherheitsfunktion ist dann zusammen mit ihrer passenden Simulationsumgebung in einem Container implementiert, und dies vorzugsweise nur mit denjenigen Funktionen der ausgewählten Simulationsumgebung, die sie tatsächlich benötigt.

Die Sicherheitsfunktionen kommunizieren vorzugsweise über ein zustandsbehaftetes Nachrichtensystem miteinander (stateful communication). Das ermöglicht, die Kommunikation nachzuvollziehen, abzusichern und im Falle von Fehlern dort wieder anzusetzen, wo der Fehler auftrat. Geeignete Implementierungen für das Nachrichtensystem wie Apache Kafka sind einleitend beispielhaft genannt.

Die Funktionen zur Kommunikation über das zustandsbehaftete Kommunikationssystem sind vorzugsweise mit der jeweiligen Sicherheitsfunktion in deren Container implementiert. Die Sicherheitsfunktionen sind damit in die Lage versetzt, selbständig an der für sie notwendigen Kommunikation teilzunehmen, und alle Überwachungsmechanismen für die ausgetauschten Nachrichten können greifen.

Die Container mit den Sicherheitsfunktionen werden bevorzugt in einer Ausführungsumgebung mit mindestens einem Rechenknoten von einem Container-Orchestrierungssystem verwaltet. Damit werden die für reale Sicherheitsfunktionen in EP 4 040 034 A1 vorgestellten Mechanismen auch in der Simulation oder Virtualisierung verfügbar. Die Ausführungsumgebung koordiniert oder orchestriert die Container mit den Sicherheitsfunktionen. Es gibt mindestens zwei Abstraktionsschichten, einmal eine jeweilige Containerschicht (container runtime) der Container und zum zweiten eine darüber liegende Orchestrierungsschicht (orchestration layer) der Ausführungsumgebung. Das ermöglicht insbesondere eine Lastverteilung (load balancing), so dass insbesondere Latenzen zwischen der Simulation und der Realität vernachlässigbar gering gehalten werden können.

Es ist hier zu trennen zwischen dem funktionalen Begriff der Ausführungsumgebung und der tatsächlichen Hardware. Letzteres, also das strukturelle Element, kann zur Unterscheidung als Verarbeitungseinheit bezeichnet werden. Die Verarbeitungseinheit umfasst mindestens einen Rechenknoten. Das ist eine digitale Rechenvorrichtung beziehungsweise ein Hardwareknoten oder ein Teil davon, der Rechen- und Speicherkapazitäten zum Ausführen eines Softwarefunktionsblocks zur Verfügung stellt. Allerdings muss nicht jeder Rechenknoten zwangsläufig ein separater Hardwarebaustein sein, es können beispielsweise durch Verwendung von Multiprozessoren mehrere Rechenknoten auf demselben Gerät realisiert sein, und umgekehrt kann ein Rechenknoten unterschiedliche Hardwareressourcen bündeln.

Die Container mit ihren Sicherheitsfunktionen wiederum können als Logikeinheit bezeichnet werden. In der Ausführungsumgebung kann es weitere Logikeinheiten geben, die noch im Sicherheitskontext Diagnosen leisten, aber auch außerhalb der Sicherheit für weitere Diagnosen, Automatisierungsaufgaben oder sonstiges zuständig sind. Die Ausführungsumgebung ist vorzugsweise dafür ausgebildet, Logikeinheiten zu erzeugen, aufzulösen und einem Rechenknoten zuzuweisen beziehungsweise sie zwischen Rechenknoten zu verschieben. Das geschieht vorzugsweise nicht nur einmalig, sondern auch dynamisch während des Betriebs, und es betrifft ganz ausdrücklich auch die sicherheitsrelevanten Logikeinheiten und damit ebenso die Container der Sicherheitsfunktionen. Die Verknüpfung zwischen Hardware und Auswertung wird damit unter Wahrung der funktionalen Sicherheit fließend. Herkömmlich hingegen werden sämtliche Sicherheitsfunktionen fest und unveränderlich auf dedizierter Hardware implementiert. Eine Veränderung, soweit überhaupt ohne Umbau oder Neuentwicklung darstellbar, würde als völlig unverträglich mit dem zugrundeliegenden Sicherheitskonzept angesehen. Das gilt schon für eine einmalige Implementierung und erst recht dynamische Änderungen zur Laufzeit. Im Gegenteil wurde bisher stets alles daran gesetzt, mit durchaus großem Aufwand und zahlreichen komplexen Einzelmaßnahmen, dass die Sicherheitsfunktion anfangs wie über die gesamte Betriebszeit eine wohldefinierte und unveränderte Umgebung vorfindet.

Die Ausführungsumgebung ist bevorzugt dafür ausgebildet, Rechenknoten einzubinden und/oder auszuschließen. Nicht nur die Software oder Containerlandschaft, ebenso die Hardwareumgebung darf sich damit ändern, die Ausführungsumgebung ist in der Lage, damit umzugehen und neue oder angepasste Rechenknoten zu bilden. Es ist demnach möglich, neue Hardware anzuschließen oder Hardware auszutauschen, insbesondere zum Ersatz bei (Teil-)ausfall sowie zum Aufrüsten und zur Bereitstellung zusätzlicher Rechen- und Speicherressourcen. Die Logikeinheiten können auf den von der Ausführungsumgebung abstrahierten Rechenknoten trotz einer möglicherweise auch rabiat veränderten Hardwarekonfiguration weiterarbeiten.

Die Implementierung der Ausführungsumgebung erfolgt vorzugsweise in Kubernetes. Dort wird die Ausführungsumgebung als "Control plane" bezeichnet. Ein Master koordiniert die allgemeinen Abläufe beziehungsweise die Orchestrierung (orchestration layer). Rechenknoten heißen in Kubernetes Nodes, und sie weisen mindestens einen Unterknoten oder Pod auf, in dem die Logikeinheiten in jeweiligen Containern ablaufen. Kubernetes kennt bereits Mechanismen, mit denen geprüft wird, ob eine Logikeinheit noch arbeitet. Diese Überprüfung genügt jedoch keinerlei sicherheitsspezifischen Anforderungen und beschränkt sich im Wesentlichen darauf, hin und wieder ein Lebenszeichen zu erhalten und womöglich einen Container neu zu starten. Dabei gibt es keinerlei Garantien, wann der Fehler auffällt und wieder behoben ist.

Die Ausführungsumgebung ist bevorzugt auf mindestens einem Sensor, einer speicherprogrammierbaren Steuerung, einer Maschinensteuerung, einer Rechnervorrichtung in einem lokalen Netzwerk, einem Edge-Device und/oder in einer Cloud implementiert. Die zugrundeliegende Hardwarelandschaft ist mit anderen Worten praktisch beliebig, was ein ganz großer Vorteil ist. Die Ausführungsumgebung arbeitet abstrakt mit Rechenknoten, die darunterliegende Hardware kann sich sehr heterogen zusammensetzen. Insbesondere werden der Sicherheitstechnik auch Edge- oder Cloud-Architekturen zugänglich, ohne dabei auf die vertraute Auswertungshardware von (sicheren) Sensoren oder Steuerungen verzichten zu müssen.

Vorzugsweise überwacht mindestens eine containerisierte Diagnosefunktion die Sicherheitsfunktionen, wobei dazu die Sicherheitsfunktion Zustandsnachrichten und Ausführungsnachrichten an die Diagnosefunktion übermittelt und die Diagnosefunktion in einer Zustandsüberwachung anhand von Zuständen aus den Zustandsnachrichten und in einer Ausführungsüberwachung anhand eines Ausführungsablaufs aus den Ausführungsnachrichten eine sicherheitsrelevante Fehlfunktion erkennt. Diese Diagnose ist zunächst auf die virtuellen Sicherheitsfunktionen bezogen, erstreckt sich aber vorzugsweise ebenso auf die realen Sicherheitsfunktionen, beziehungsweise es kann dafür mindestens eine weitere vorzugsweise containerisierte Diagnosefunktion vorgesehen sein. Durch die Diagnosefunktion wird eine Zustands- und Ausführungsüberwachung der Sicherheitsfunktionen beziehungsweise von deren Containern durchgeführt. Der über eine Zustandsnachricht übermittelte Zustand oder Status der diagnostizierten Sicherheitsfunktion gibt Auskunft über deren Einsatzbereitschaft und mögliche Einschränkungen oder Fehler. Eine Ausführungsnachricht betrifft die Ausführung der Sicherheitsfunktion beziehungsweise des zugehörigen Dienstes, und daraus lässt sich ein Ausführungsablauf der ausgeführten Sicherheitsfunktionen beziehungsweise Dienste erzeugen. Gemeinsam ermöglichen beide Arten von Nachrichten beziehungsweise Überwachungen eine Systemdiagnose, mit der eine sicherheitsrelevante Fehlfunktion erkannt werden kann. Dabei benötigt die Diagnosefunktion weder spezielles Wissen, wie oder mit welchem Algorithmus eine Sicherheitsfunktion arbeitet, noch welche Auswertungsergebnisse sie liefert, obwohl beides ergänzend möglich wäre. Im Fehlerfall kann die sichere Funktion nicht garantiert werden, vorzugsweise mit ähnlichen Konsequenzen einer Ausgabe eines Sicherheitssignals beziehungsweise einer sicherheitsgerichteten Reaktion der Maschine wie oben für den Fall einer gefährlichen Situation nach sicherheitsgerichteter Auswertung der Simulation.

Der mindestens eine Sensor ist bevorzugt als optoelektronischer Sensor, insbesondere Lichtschranke, Lichttaster, Lichtgitter, Laserscanner, FMCW-LIDAR oder Kamera, als Ultraschallsensor, Trägheitssensor, kapazitiver Sensor, magnetischer Sensor, induktiver Sensor, UWB-Sensor oder als Prozessgrößensensor ausgebildet, insbesondere Temperatur-, Durchfluss-, Füllstand- oder Drucksensor, wobei insbesondere eine Vielzahl gleicher oder unterschiedlicher Sensoren vorgesehen ist. Dies sind einige Beispiele für Sensoren, die für eine Sicherheitsanwendung relevante Sensordaten liefern können. Die konkrete Auswahl des Sensors oder der Sensoren hängt von der jeweiligen Sicherheitsanwendung ab. Die Sensoren können bereits selbst als Sicherheitssensoren ausgebildet sein. Es ist aber erfindungsgemäß ausdrücklich alternativ vorgesehen, die Sicherheit erst nachgelagert durch Tests, zusätzliche Sensorik beziehungsweise (diversitäre) Redundanz oder Mehrkanaligkeit und dergleichen zu erzielen sowie sichere und nicht sichere Sensoren gleicher oder unterschiedlicher Sensorprinzipien miteinander zu kombinieren. Beispielsweise würde ein ausgefallener Sensor keine Sensordaten liefern, dies würde sich in den Zustands- und Ausführungsnachrichten der für den Sensor zuständigen Sicherheitsfunktionseinheit niederschlagen und damit von der Diagnoseeinheit in der Zustands- und Ausführungsüberwachung bemerkt.

Die erfindungsgemäße Sicherheitsvorrichtung oder das Sicherheitssystem umfasst mindestens eine Maschine, mindestens einen Sensor und mindestens eine Verarbeitungseinheit. Letztere stellt in beliebiger Hardware Computerkapazitäten zur Verfügung. In der Verarbeitungseinheit läuft ein erfindungsgemäßes Verfahren ab. Dabei sind hinsichtlich des Verfahrens und der Hardware die verschiedenen beschriebenen Ausgestaltungen und Ausführungsformen möglich.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung einer Sicherheitsvorrichtung;
- Fig. 2: eine schematische Darstellung einer Ausführungsumgebung der Sicherheitsvorrichtung;
- Fig. 3: eine schematische Darstellung einer Ausführungsumgebung beispielhaft mit zwei Rechenknoten;
- Fig. 4: eine schematische Darstellung einer speziellen Ausführungsumgebung ähnlich Figur 3 unter Verwendung von Kubernetes;
- Fig. 5: eine schematische Darstellung des doppelten Nachrichtenflusses mit Zustands- und Ausführungsnachrichten zu einer System-Diagnoseeinheit;
- Fig. 6: eine schematische Darstellung einer Zustandsüberwachung auf Basis der Zustandsnachrichten;
- Fig. 7: eine schematische Darstellung einer Ausführungsüberwachung auf Basis der Ausführungsnachrichten;
- Fig. 8: eine gegenüberstellende Illustration der sicherheitstechnischen Überwachung in der virtuellen Welt und in der realen Welt;
- Fig. 9: eine Darstellung einer Virtualisierung mindestens einer von mindestens einem Sensor überwachten Maschine mit monolithischer Implementierung von Sicherheitsfunktionen in jeweilige Simulationsumgebungen; und
- Fig. 10: eine Darstellung ähnlich Figur 9 einer sicheren Virtualisierung nun mit einer mit Hilfe von Containern atomisierten Implementierung von Sicherheitsfunktionen.

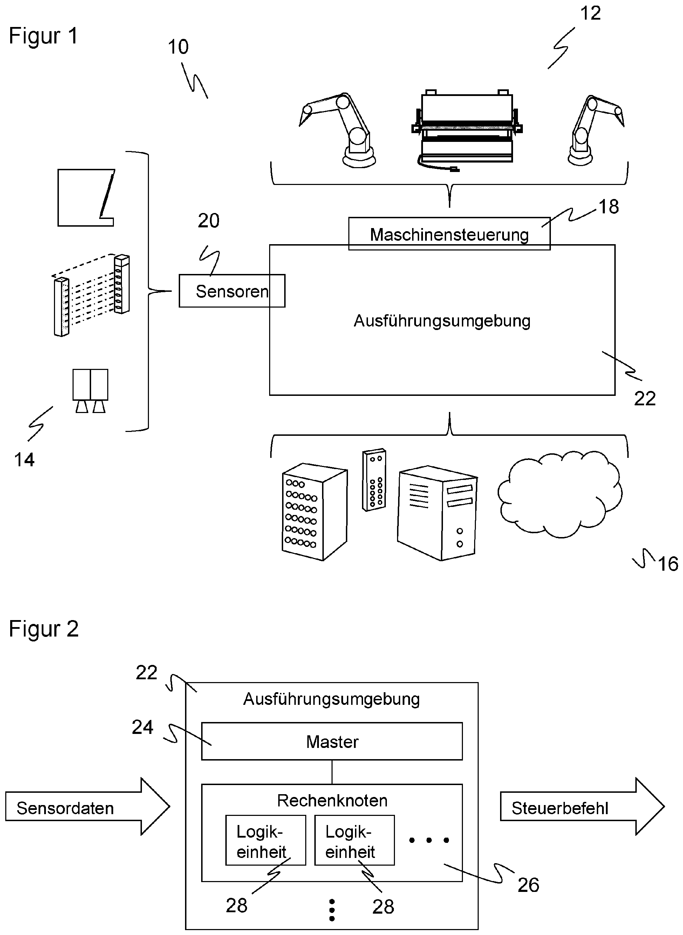

Figur 1 zeigt eine Übersichtsdarstellung einer Sicherheitsvorrichtung 10. Die Begriffe Sicherheit sowie sicher und nicht sicher sind weiterhin so zu verstehen, dass entsprechende Komponenten, Übertragungswege und Auswertungen die einleitend genannten Kriterien von Sicherheitsnormen erfüllen beziehungsweise nicht erfüllen.

Die Sicherheitsvorrichtung 10 lässt sich grob in drei Blöcke mit mindestens einer zu überwachenden Maschine 12, mindestens einem Sensor 14 zur Erzeugung von Sensordaten der überwachten Maschine 12 und mindestens einer Hardwarekomponente 16 mit Rechen- und Speicherressourcen für die Steuer- und Auswertungsfunktionalität zur Auswertung der Sensordaten und Auslösen einer etwaigen sicherheitsgerichteten Reaktion der Maschine 12 unterteilen. Maschine 12, Sensor 14 und Hardwarekomponente 16 werden im Folgenden manchmal im Singular und manchmal im Plural angesprochen, was ausdrücklich die jeweils anderen Varianten mit nur einer jeweiligen Einheit 12, 14, 16 oder mehreren solchen Einheiten 12, 14, 16 einschließen soll.

An den Rändern sind jeweils Beispiele für die drei Blöcke dargestellt. Bei der vorzugsweise industriell eingesetzten Maschine 12 handelt es sich beispielsweise um eine Bearbeitungsmaschine, eine Fertigungsstraße, eine Sortieranlage, eine Prozessanlage, einen Roboter oder ein Fahrzeug, das schienengebunden sein kann oder nicht und insbesondere führerlos ist (AGC, Automated Guided Cart, AGV, Automated Guided Vehicle, AMR, Autonomous Mobile Robot).

Als beispielhafte Sensoren 14 sind ein Laserscanner, ein Lichtgitter und eine Stereokamera als Vertreter optoelektronischer Sensoren dargestellt, zu denen weitere Sensoren wie Lichttaster, Lichtschranken, FMVW-LIDAR oder Kameras mit jeglicher 2D- oder 3D-Erfassung zählen, wie Projektions- oder Lichtlaufzeitverfahren. Einige weiterhin nicht abschließende Beispiele für Sensoren 14 sind UWB-Sensoren, Ultraschallsensoren, Trägheitssensoren, kapazitive, magnetische oder induktive Sensoren, oder Prozessgrößensensoren, wie Temperatur-, Durchfluss-, Füllstand- oder Drucksensor. Diese Sensoren 14 können je nach Sicherheitsvorrichtung 10 in beliebiger Anzahl vorhanden sein und beliebig miteinander kombiniert werden.

Denkbare Hardwarekomponenten 16 sind Steuerungen (PLC, Programmable Logic Controller beziehungsweise SPS, speicherprogrammierbare Steuerung), ein Rechner in einem lokalen Netzwerk, insbesondere ein Edge-Device, oder eine eigene oder von Dritten betriebene Cloud, und ganz allgemein jegliche Hardware, die Ressourcen für digitale Datenverarbeitung bereitstellt.

Im Inneren der Figur 1 sind die drei Blöcke nochmals aufgegriffen. Die Maschine 12 ist vorzugsweise über ihre Maschinensteuerung 18 mit der Sicherheitsvorrichtung 10 verbunden, wobei die Maschinensteuerung im Falle eines Roboters eine Robotersteuerung ist, im Falle eines Fahrzeugs eine Fahrzeugsteuerung, in einer Prozessanlage eine Prozesssteuerung und ähnlich für andere Maschinen 12. Die im Inneren als Block 20 zusammengefassten Sensoren 14 erzeugen nicht nur Sensordaten, sondern weisen auch eine nicht einzeln gezeigte Schnittstelle auf, um die Sensordaten in roher oder (vor)verarbeiteter Form auszugeben sowie in aller Regel eine eigene Steuer- und Auswertungseinheit, also eine eigene Hardwarekomponente zur digitalen Datenverarbeitung.

Eine Ausführungsumgebung 22 ist ein zusammenfassender Begriff für eine Verarbeitungseinheit, welche unter anderem die Datenverarbeitung der Sensordaten leistet, um daraus Steuerbefehle an die Maschine 12 oder sonstige sicherheitsrelevante und weitere Informationen zu gewinnen. Die Ausführungsumgebung 22 ist auf den Hardwarekomponenten 16 implementiert und wird nachfolgend unter Bezugnahme auf die Figuren 2 bis 4 noch näher erläutert. Erfindungsgemäß ist nicht festgelegt, auf welcher Hardware die Ausführungsumgebung 22 ausgeführt wird. Die obige Auflistung möglicher Hardwarekomponenten nennt einige Beispiele, die beliebig kombinierbar sind. Ferner ist die Ausführungsumgebung 22 absichtlich mit Überlapp zu der Maschinensteuerung 18 und dem Block 20 der Sensoren 14 eingezeichnet, da auch interne Rechen- und Speicherressourcen der Sensoren 14 und/oder der Maschine 12 von der Ausführungsumgebung 22 genutzt werden können, wiederum in beliebiger Kombination einschließlich der Möglichkeit, dass es gar keine zusätzlichen Hardwarekomponenten 16 außerhalb der Maschine 12 und der Sensoren 14 gibt. Im Folgenden wird davon ausgegangen, dass die Hardwarekomponenten 16 die Rechen- und Speicherressourcen stellen, damit ist dann eine Einbeziehung interner Hardware von Maschine 12 und/oder Sensoren 14 mit gemeint.

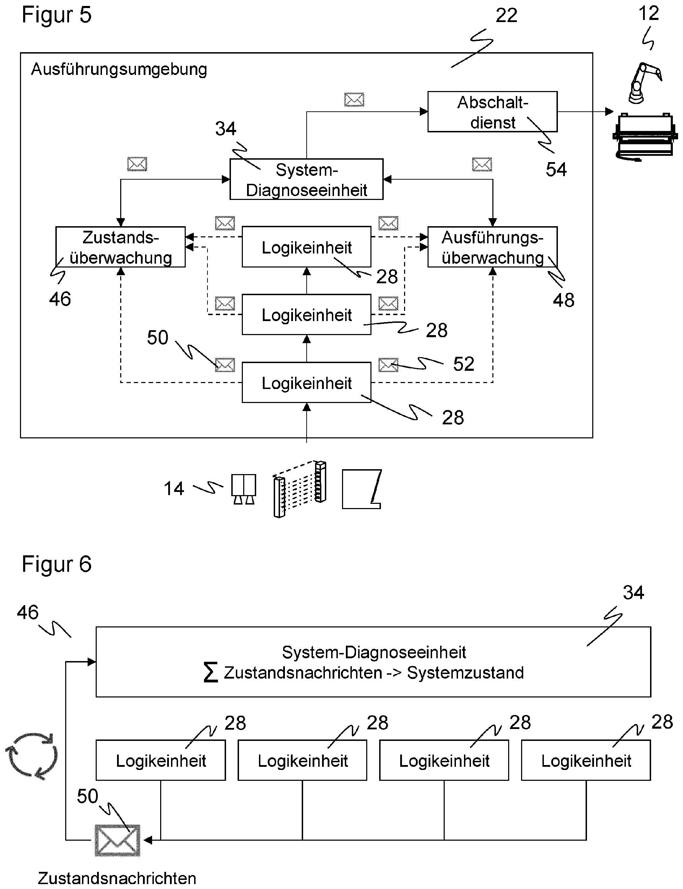

Die Sicherheitsvorrichtung 10 und insbesondere die Ausführungsumgebung 22 stellt nun Sicherheitsfunktionen und Diagnosefunktionen bereit. Eine Sicherheitsfunktion nimmt den Strom zeitlich aufeinanderfolgender Mess- und Ereignisinformationen mit den Sensordaten entgegen und erzeugt entsprechende Auswertungsergebnisse insbesondere in Form von Steuerungssignalen für die Maschine 12. Zudem können Selbstdiagnoseinformationen, Diagnoseinformationen eines Sensors 14 oder Übersichtsinformationen gewonnen werden. Davon abzugrenzen sind die Diagnosefunktionen für eine Überwachung einer Sicherheitsfunktion, die später unter Bezugnahme auf die Figuren 5 bis 7 noch im Detail erläutert werden. Neben diesen sicherheitsrelevanten Funktionen oder sicheren Automatisierungsfunktionen sind als weitere Option nicht sichere Automatisierungsfunktionen denkbar.

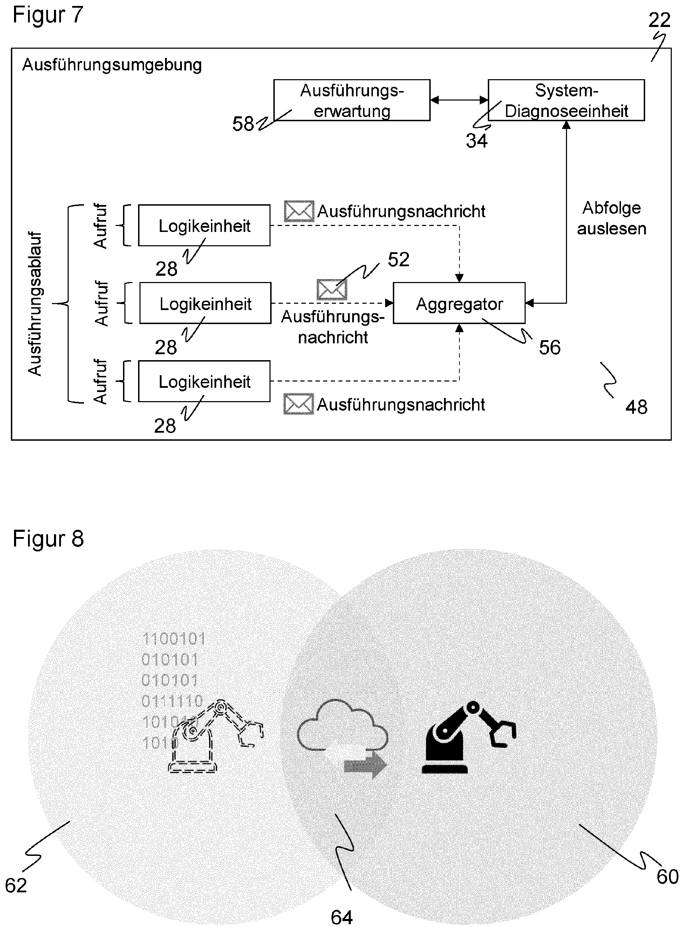

Die Sicherheitsvorrichtung 10 erreicht eine hohe Verfügbarkeit und Robustheit gegenüber unvorhergesehenen internen wie externen Ereignissen, indem Sicherheitsfunktionen als Dienste oder Dienstleistungen der Hardwarekomponenten 16 erbracht werden. Die flexible Zusammensetzung der Hardwarekomponenten 16 und vorzugsweise deren Vernetzung im lokalen oder nicht lokalen Netzwerk beziehungsweise in eine Cloud ermöglichen eine Redundanz und Leistungs-Elastizität, so dass sehr robust mit Unterbrechungen, Störungen und Anforderungsspitzen umgegangen werden kann. Die Sicherheitsvorrichtung 10 erkennt, sobald Fehler nicht mehr aufgefangen werden und damit sicherheitsrelevant werden, und leitet dann eine situationsgerechte Reaktion ein, mit der die Maschine 12 erforderlichenfalls in einen sicheren Zustand überführt wird. Dazu wird die Maschine 12 beispielsweise angehalten, verlangsamt, sie weicht aus oder arbeitet in einem ungefährlichen Modus. Es sei nochmals klargestellt, dass es zwei Klassen von Ereignissen gibt, die eine sicherheitsgerichtete Reaktion auslösen können: zum einen ein als gefährlich eingestuftes Ereignis, das sich aus den Sensordaten ergibt, und zum anderen das Aufdecken eines sicherheitsrelevanten Fehlers. Später unter Bezugnahme auf die Figuren 8 bis 10 kommen zwei weitere mögliche Auslöser hinzu, nämlich ein innerhalb einer Simulation als gefährlich eingestuftes Ereignis sowie eine nicht mehr sicher tolerierbare Diskrepanz zwischen der bislang beschriebene sicherheitsgerichteten Auswertung und einer zugehörigen Simulation.

Figur 2 zeigt eine schematische Darstellung der Ausführungsumgebung 22. Aufgabe der Ausführungsumgebung 22 ist letztlich, aus Sensordaten einen Steuerbefehl abzuleiten, insbesondere ein Sicherheitssignal, das eine sicherheitsgerichtete Reaktion der Maschine 12 auslöst. Die Ausführungsumgebung 22 weist einen Master 24 und mindestens einen Rechenknoten 26 auf. Die erforderliche Rechen- und Speicherkapazität für Master 24 und Rechenknoten 26 stellen die Hardwarekomponenten 16 bereit, die Ausführungsumgebung 22 kann sich transparent über eine Vielzahl von Hardwarekomponenten 16 erstrecken. Ein Rechenknoten 26 ist dabei abstrakt oder virtuell zu verstehen, es gibt nicht notwendig eine 1:1-Beziehung zwischen einem Rechenknoten 26 und einer Hardwarekomponente 16, sondern eine Hardwarekomponente 16 kann mehrere Rechenknoten 26 bereitstellen oder umgekehrt ein Rechenknoten 26 auf mehrere Hardwarekomponenten 16 verteilt sein. Diese Verteilung gilt analog für den Master 24.

Ein Rechenknoten 26 weist eine oder mehrere Logikeinheiten 28 auf. Eine Logikeinheit 28 ist eine in sich abgeschlossene funktionale Einheit, die Informationen entgegennimmt, diese zusammenführt, transformiert, umgestaltet oder allgemein zu einer neuen Information verarbeitet und dann zur Visualisierung, als Steuerbefehl oder zur weiteren Verarbeitung möglichen Abnehmern zur Verfügung stellt, insbesondere weiteren Logikeinheiten 28 oder einer Maschinensteuerung 12. Im Rahmen dieser Beschreibung sind vornehmlich drei Arten von Logikeinheiten 28 zu unterscheiden, die schon kurz angesprochen wurden, nämlich Sicherheitsfunktionseinheiten, Diagnoseeinheiten und optional Automatisierungseinheiten, die nicht zur Sicherheit beitragen, aber die Integration von sonstigen Automatisierungsaufgaben in die Gesamtanwendung ermöglichen.

Die Ausführungsumgebung 22 aktiviert die jeweils benötigten Logikeinheiten 28 und sorgt für deren geordneten Betrieb. Hierzu weist sie den jeweiligen Logikeinheiten 28 die benötigten Ressourcen auf den zur Verfügung stehenden Rechenknoten 26 beziehungsweise Hardwarekomponenten 26 zu und überwacht die Aktivität sowie den Ressourcenbedarf aller Logikeinheiten 28. Vorzugsweise erkennt die Ausführungsumgebung 22, wenn eine Logikeinheit 28 nicht mehr aktiv ist oder es zu Unterbrechungen der Ausführungsumgebung 22 oder der Logikeinheit 28 kam. Sie versucht dann, die Logikeinheit 28 zu reaktivieren und erzeugt eine neue Kopie der Logikeinheit 28, wenn das nicht möglich ist, um so den geordneten Betrieb zu wahren. Das ist allerdings ein Mechanismus, der den Anforderungen an funktionale Sicherheit nicht genügt und nur zum Tragen kommt, sofern die noch unter Bezugnahme auf die Figuren 5 bis 7 zu erläuternde Systemdiagnose nicht zuvor einen sicherheitsrelevanten Fehler aufdeckt, oder beispielsweise während einer Initialisierungs- oder Wiederanlaufphase, in der ohnehin die Maschine 12 noch ruht.

Unterbrechungen können vorhergesehen wie unvorhergesehen sein. Beispielhafte Ursachen sind Fehler in der Infrastruktur, also den Hardwarekomponenten 16, deren Betriebssystem oder den Netzwerkverbindungen, weiterhin versehentliche Fehlbedienungen oder Manipulationen oder der vollständige Verbrauch der Ressourcen einer Hardwarekomponente 16. Kann eine Logikeinheit 28 alle erforderlichen, insbesondere sicherheitsrelevanten Informationen nicht oder jedenfalls nicht schnell genug verarbeiten, so kann die Ausführungsumgebung 22 zusätzliche Kopien der betroffenen Logikeinheit 28 erstellen, um so die Verarbeitung der Informationen weiter zu gewährleisten. Auf diese Weise sorgt die Ausführungsumgebung 22 dafür, dass die Logikeinheit 28 ihre Funktion mit einer erwarteten Qualität und Verfügbarkeit erbringt. Auch solche Reparatur- und Nachbesserungsmaßnahmen sind entsprechend den Bemerkungen im Vorabsatz kein Ersatz der noch zu beschreibenden Systemdiagnose.

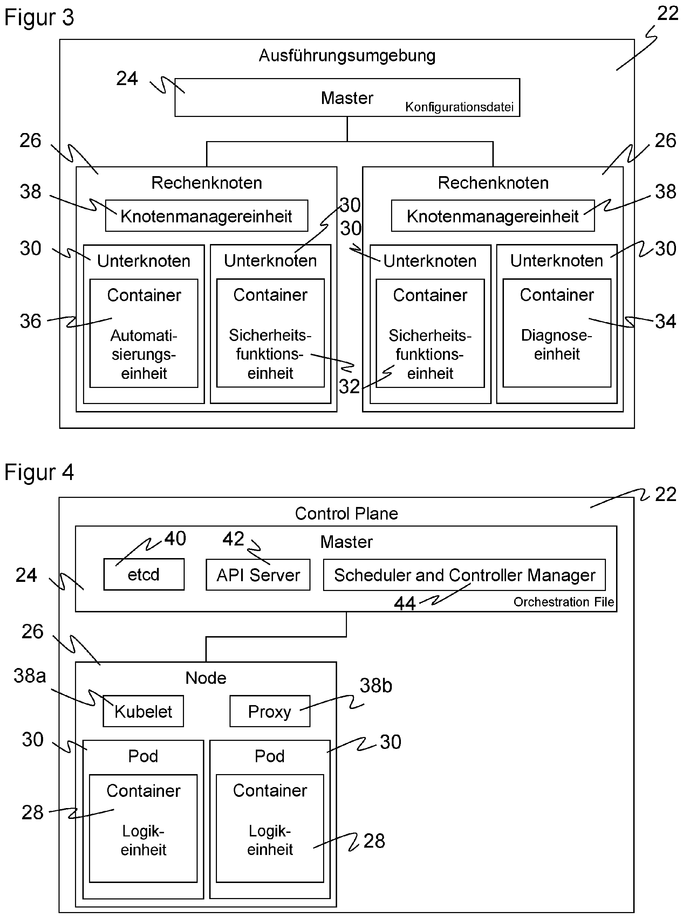

Figur 3 zeigt nochmals eine weitere, vorteilhaft ausdifferenzierte Ausführungsumgebung 22 der Sicherheitsvorrichtung 10. Der Master 24 bildet die Verwaltungs- und Kommunikationszentrale. Darin ist eine Konfigurationsinformation beziehungsweise Konfigurationsdatei über die vorhandenen Logikeinheiten 28 gespeichert, so dass der Master 24 die erforderlichen Kenntnisse über die Konfiguration hat, insbesondere welche Logikeinheiten 28 es gibt und geben soll, auf welchen Rechenknoten 26 sie zu finden sind und in welchem Zeitablauf sie Ressourcen erhalten und aufgerufen werden. Die Konfigurationsdatei ist bevorzugt über Signaturen gegen absichtliche und unabsichtliche Manipulationen abgesichert, beispielsweise über Blockchaintechnologien. Hier trifft sich die Sicherheitstechnik (Safety) vorteilhaft mit der Datenintegrität ((Cyber-)Security), denn auf diese Weise werden Angriffe abgewehrt oder jedenfalls erkannt, die unabsehbare Unfallfolgen nach sich ziehen könnten.

Die Rechenknoten 26 weisen vorteilhafterweise eine eigene Unterstruktur auf, wobei die nun beschriebenen Einheiten auch nur teilweise vorhanden sein können. Zunächst können Rechenknoten 26 nochmals in Unterknoten 30 unterteilt sein. Die gezeigte Anzahl von zwei Rechenknoten 26 mit jeweils zwei Unterknoten 30 ist rein beispielhaft, es kann beliebig viele Rechenknoten 26 mit jeweils beliebig vielen Unterknoten 30 geben, wobei die Anzahl von Unterknoten 30 über die Rechenknoten 26 variieren kann. Logikeinheiten 28 werden vorzugsweise erst innerhalb der Unterknoten 30 erzeugt, nicht bereits auf Ebene von Rechenknoten 26. Bevorzugt sind Logikeinheiten 28 innerhalb von Containern virtualisiert, also containerisiert. Jeder Unterknoten 30 weist also einen oder mehrere Container mit vorzugsweise jeweils einer Logikeinheit 28 auf. In Figur 3 sind statt generischer Logikeinheiten 28 die drei schon angesprochenen Arten von Logikeinheiten 28 gezeigt, nämlich zwei Sicherheitsfunktionseinheiten 32, eine Diagnoseeinheit 34 und eine Automatisierungseinheit 36. Art und Anzahl der Logikeinheiten 28 sind nur ein Beispiel, wobei die noch unter Bezugnahme auf die Figuren 5 bis 7 zu erläuternde Systemdiagnose in der Tat vorzugsweise mit nur einer Diagnoseeinheit 34 auskommt. Die Zuordnung von Logikeinheiten 28 zu Unterknoten 30 und Rechenknoten 26 ist von der logischen Struktur und Zusammenarbeit der Logikeinheiten 28 gänzlich unabhängig. Aus der ohnehin beispielhaften gezeigten Anordnung von Logikeinheiten 28 lässt sich also über das inhaltliche Zusammenspiel gar nichts schließen, es wären beliebige Umverteilungen bei völlig gleicher Funktionalität möglich, dafür sorgt die Ausführungsumgebung 22.

Eine Knotenmanagereinheit 38 des Rechenknotens 26 koordiniert dessen Unterknoten 30 und die diesem Rechenknoten 26 zugewiesenen Logikeinheiten 28. Die Knotenmanagereinheit 38 kommuniziert ferner mit dem Master 24 sowie weiteren Rechenknoten 26. Die Verwaltungsaufgaben der Ausführungsumgebung 22 können praktisch beliebig auf den Master 24 und die Knotenmanagereinheit 38 verteilt werden, der Master also als verteilt implementiert angesehen werden. Vorteilhaft ist aber, wenn sich der Master um die globalen Aufgaben der Ausführungsumgebung 22 und jede Knotenmanagereinheit 38 um die lokalen Aufgaben des jeweiligen Rechenknotens 26 kümmert. Trotzdem kann der Master 24 vorzugsweise auf mehrere Hardwarekomponenten 16 verteilt oder redundant ausgebildet sein, um dessen Ausfallsicherheit zu erhöhen.

Das typische Beispiel für die Sicherheitsfunktion einer Sicherheitsfunktionseinheit 32 ist die sicherheitsgerichtete Auswertung von Sensordaten des Sensors 14. Möglich sind hier unter anderem Abstandsüberwachung (speziell Speed-and-Separation), Durchgangsüberwachung, Schutzfeldüberwachung oder Kollisionsvermeidung mit dem Ziel einer angemessenen sicherheitsgerichteten Reaktion der Maschine 12 im Gefahrenfall. Dies ist die Kernaufgabe der Sicherheitstechnik, wobei je nach Sensor 14 und Auswertungsverfahren verschiedenste Wege denkbar sind, zwischen einer normalen und einer gefährlichen Situation zu unterscheiden. Für jede Sicherheitsanwendung oder Gruppe von Sicherheitsanwendungen können passende Sicherheitsfunktionseinheiten 32 programmiert oder aus einem Pool vorhandener Sicherheitsfunktionseinheiten 32 ausgewählt werden. Wenn die Arbeitsumgebung 22 ein Sicherheitsfunktionsmodul 32 erzeugt, dann bedeutet das also keineswegs, dass die Sicherheitsfunktion damit neu geschöpft wird. Vielmehr wird auf entsprechende Bibliotheken oder dedizierte fertige Programme auf bekanntem Weg wie mittels Datenträger, Speicher oder Netzwerkverbindung zurückgegriffen. Denkbar ist, dass eine Sicherheitsfunktion teilautomatisch oder automatisch wie aus einem Baukasten fertige Programmmodule zusammenfügt und/oder passend konfiguriert wird.

Eine Diagnoseeinheit 34 kann im Sinne der einleitend genannten EP 4 040 034 A1 verstanden werden und als Watchdog fungieren oder Tests und Diagnosen unterschiedlicher Komplexität durchführen. Dadurch können sichere Algorithmen und Selbstüberwachungsmaßnahmen einer Sicherheitsfunktionseinheit 32 jedenfalls teilweise ersetzt ergänzt werden. Dafür hat die Diagnoseeinheit 34 Erwartungen an die Ausgabe der Sicherheitsfunktionseinheit 32 zu bestimmten Zeiten, sei es in deren regulärem Betrieb oder in Antwort auf bestimmte als Test eingespeiste künstliche Sensorinformationen. Vorzugsweise ist eine Diagnoseeinheit 34 eingesetzt, die nicht einzelne Sicherheitsfunktionseinheiten 32 testet oder von ihnen ein bestimmtes Auswertungsergebnis erwartet, auch wenn dies ergänzend möglich ist, sondern die eine Systemdiagnose der an der Absicherung der Maschine 12 beteiligten Sicherheitsfunktionsmodule 32 durchführt, wie später unter Bezugnahme auf die Figuren 5 bis 7 erläutert.

Eine Automatisierungseinheit 36 ist eine Logikeinheit 28 für nicht sicherheitsrelevante Automatisierungsaufgaben, die Sensoren 14 und Maschinen 12 oder Teile davon überwacht, allgemein Aktoren, und die basierend auf diesen Informationen (Teil-)Abläufe steuert oder Informationen darüber bereitstellt. Eine Automatisierungseinheit 36 wird von der Ausführungsumgebung im Prinzip behandelt wie jede Logikeinheit 28, und damit ist sie vorzugsweise ebenfalls containerisiert. Beispiele für Automatisierungsaufgaben sind Qualitätsprüfung, Variantensteuerung, Objekterkennung zum Greifen, Sortieren oder für sonstige Bearbeitungsschritte, Klassifikationen und dergleichen. Die Abgrenzung zu den sicherheitsrelevanten Logikeinheiten 28, also zu einer Sicherheitsfunktionseinheit 32 oder Diagnoseeinheiten 34, besteht darin, dass eine Automatisierungseinheit 36 nicht zum Unfallschutz, d.h. der sicherheitstechnischen Anwendung beiträgt. Ein verlässliches Arbeiten und eine gewisse Überwachung durch die Ausführungsumgebung 22 ist erwünscht, aber dies dient einer Erhöhung der Verfügbarkeit und damit der Produktivität und Qualität, nicht der Sicherheit. Natürlich lässt sich diese Verlässlichkeit auch dadurch herstellen, dass eine Automatisierungseinheit 36 so sorgfältig überwacht wird wie eine Sicherheitsfunktionseinheit 32, so dass dies möglich, aber nicht zwingend erforderlich ist.

Durch den Einsatz der Ausführungsumgebung 22 wird es möglich, Logikeinheiten 28 für eine Sicherheitsanwendung praktisch beliebig auf eine auch stark heterogene Umgebung der Hardwarekomponenten 26 einschließlich eines Edge-Netzwerks oder einer Cloud zu verteilen. Die Ausführungsumgebung 22 kümmert sich um alle erforderlichen Ressourcen und Rahmenbedingungen der Logikeinheiten 28. Sie ruft die erforderlichen Logikeinheiten 28 ins Leben, beendet sie oder verschiebt sie zwischen Rechenknoten 26 und Unterknoten 30.

Die Architektur der Ausführungsumgebung 22 erlaubt zudem ein nahtloses Verschmelzen von Sicherheit und Automatisierung, da Sicherheitsfunktionseinheiten 32, Diagnoseeinheiten 34 und Automatisierungseinheiten 36 in derselben Umgebung und praktisch simultan ausgeführt sowie gleichartig behandelt werden können. Im Falle eines Konflikts gibt die Ausführungsumgebung 22 vorzugsweise den Sicherheitsfunktionseinheiten 32 und Diagnoseeinheiten 34 Priorität, etwa im Falle knapper Ressourcen. In der Konfigurationsdatei können Ausführungsregeln für die Koexistenz von Logikeinheiten 28 der drei verschiedenen Typen berücksichtigt werden.

Figur 4 zeigt eine schematische Darstellung einer Ausführungsumgebung 22 unter beispielhafter Verwendung von Kubernetes. Die Ausführungsumgebung 22 wird hier control plane genannt. Die Figur 4 ist an die Figur 3 angelehnt, wobei ein Rechenknoten 26 der Übersicht halber weggelassen wurde und nun generische Logikeinheiten 28 stellvertretend für die drei möglichen Typen gezeigt sind. In Kubernetes besitzt der Master 24 eine Unterstruktur. Der (Kubernetes-)Master 24 ist nach wie vor nicht selbst für die Ausführung von Containern oder Logikeinheiten 28 zuständig, sondern kümmert sich um die allgemeinen Abläufe oder die Orchestrierung (orchestration layer). Dementsprechend wird die Konfigurationsdatei als orchestration file bezeichnet. Weiterhin sind eine Datenbank etcd 40 für alle relevanten Daten der Kubernetes-Umgebung, ein API-Server 42 als Schnittstelle zu Kubernetes sowie ein Scheduler and Controller Manager 44 vorhanden, der die eigentliche Orchestrierung vornimmt.

Die vorhandene Hardware wird in Nodes als Rechenknoten 26 unterteilt. In den Nodes wiederum gibt es einen oder mehrere sogenannte Pods als Unterknoten 30 und darin die Container mit den eigentlichen Micro-Services, in diesem Fall den Logikeinheiten 28 samt zugehöriger Containerlaufzeit (container runtime) und damit allen Bibliotheken und für die Logikeinheit 28 zur Laufzeit erforderlichen Abhängigkeiten. Das lokale Management leistet eine nun zweigeteilte Knotenmanagereinheit 38 mit einem sogenannten Kubelet 38a und einem Proxy 38b. Das Kubelet 38a ist ein Agent, der die eigenen Pods und Container des Nodes verwaltet. Der Proxy 38b wiederum enthält die Netzwerkregeln für die Kommunikation zwischen Nodes und mit dem Master.

Kubernetes ist eine bevorzugte, aber nicht die einzige Umsetzungsmöglichkeit für die Ausführungsumgebung 22. Als eine weitere Alternative unter mehreren wäre Docker Swarm zu nennen. Docker selbst ist keine direkte Alternative, sondern ein Werkzeug zum Erzeugen von Containern und somit sowohl mit Kubernetes als auch Docker Swarm kombinierbar, die dann die Container orchestrieren.

Figur 5 zeigt eine weitere schematische Darstellung der Ausführungsumgebung 22 zur Illustration einer Systemdiagnose durch eine Zustandsüberwachung und eine Ausführungsüberwachung. Zuständig dafür ist eine System-Diagnoseeinheit 34 als spezielle Ausprägung einer Diagnoseeinheit 34. Zu Überwachen sind hier rein beispielhaft drei Logikeinheiten 28, die in einer Sequenz arbeiten, um Daten eines Sensors 14 auszuwerten. Die Erfindung ist darauf nicht beschränkt, es kann eine beliebige Anzahl Logikeinheiten 28 in beliebiger gegenseitiger Verbindung und mit oder ohne eigene Verbindung zu einem Sensor 14 sein. Die Logikeinheiten 28 sind vorzugsweise Sicherheitsfunktionseinheiten 32. Es können weitere Diagnoseeinheiten 34 vorgesehen sein, die beispielsweise in Ergänzung der Systemdiagnose dediziert bestimmte Sicherheitsfunktionseinheiten 32 überwachen oder testen. Ferner ist auch möglich, Automatisierungseinheiten 36 in die Systemdiagnose einzubinden, auch wenn dafür eine sichere Überwachung für die Gefahren- oder Unfallvermeidung an sich nicht erforderlich wäre. Auf die konkrete Ausgestaltung der Logikeinheiten 28 kommt es im Folgenden nicht an, deshalb sind die generischen Logikeinheiten 28 dargestellt.

Die System-Diagnoseeinheit 34 ist für eine Zustandsüberwachung 46 und eine Ausführungsüberwachung 48 zuständig. Daraus kann eine abschließende Beurteilung des sicheren Zustands des Gesamtsystems abgeleitet werden. Die Zustandsüberwachung 46 wird im Anschluss unter Bezugnahme auf die Figur 6, die Ausführungsüberwachung 48 unter Bezugnahme auf die Figur 7 noch näher erläutert. In Figur 5 ist eine einzige System-Diagnoseeinheit 34 dargestellt, mit eigenen Blöcken für die Zustandsüberwachung 46 und die Ausführungsüberwachung 48. Das dient vor allem dem Verständnis des Konzepts, es ist ebenso denkbar, die Zustandsüberwachung 46 und die Ausführungsüberwachung als Teil der System-Diagnoseeinheit 34 aufzufassen oder die Funktionalität alternativ auf andere Weise zu verteilen.

Die Logikeinheiten 28 kommunizieren über ein Nachrichtensystem oder Nachrichtenübermittlungssystem mit der System-Diagnoseeinheit 34. Das Nachrichtensystem ist Teil der Ausführungsumgebung 22 oder dazu ergänzend implementiert. Es gibt einen doppelten Nachrichtenfluss von Status- oder Zustandsnachrichten 50 der Zustandsüberwachung 46, die über den inneren Zustand der sendenden Logikeinheit 28 informieren, und Ausführungsnachrichten 52 der Ausführungsüberwachung 52, die Auskunft über Dienst-Anforderungen beziehungsweise -Ausführungen der sendenden Logikeinheit 28 geben. Das Nachrichtensystem ist folglich gedoppelt vorgesehen oder mit zwei Nachrichtenkanälen ausgebildet. Vorzugsweise enthält jede Nachricht 50, 52 Metadaten, die den Nachrichtenstrom absichern. Diese Metadaten umfassen beispielsweise eine Senderinformation, einen Zeitstempel, eine Sequenzinformation und/oder eine Checksumme über die Nachrichteninhalte.

Die System-Diagnoseeinheit 34 ermittelt auf Basis der erhaltenen Zustandsnachrichten 50 einen Gesamtzustand der Sicherheitsvorrichtung 10 und entsprechend aus den erhaltenen Ausführungsnachrichten 52 eine Gesamtaussage über die Bearbeitung von Dienstanforderungen beziehungsweise einen Ausführungsablauf der Sicherheitsvorrichtung 10. Durch Vergleich mit zugehörigen Erwartungen werden Fehler in der Sicherheitsvorrichtung 10 aufgedeckt, und im Fehlerfall wird eine angemessene sicherheitsgerichtete Reaktion eingeleitet.

Nicht jede Unstimmigkeit bedeutet sofort einen sicherheitsrelevanten Fehler. So können Abweichungen je nach Sicherheitsniveau für eine gewisse Zeit geduldet werden, oder es werden Reparaturmechanismen versucht, um wieder in einen fehlerfreien Systemzustand zu gelangen. Dabei ist jedoch genau durch das Sicherheitskonzept spezifiziert, in welchem zeitlichen und sonstigen Rahmen Fehler vorerst nur beobachtet werden können. Weiterhin kann es Abstufungen von Fehlern geben, die unterschiedlich drastische Absicherungsmaßnahmen erfordern sowie situationsbedingte Bewertungen von Fehlern. Letzteres führt zu einem differenzierteren Begriff von Sicherheit und sicher, der die aktuelle Situation einbezieht. Der Ausfall einer sicherheitsrelevanten Komponente oder das Nichtausführen einer sicherheitsrelevanten Funktion kann unter bestimmten Voraussetzungen, d.h. situationsbezogen, noch nicht zwangsläufig einen unsicheren Systemzustand bedeuten. Beispielsweise könnte ein Sensor 14 ausgefallen sein, der einen Kollaborationsbereich mit einem Roboter überwacht, während sich der Roboter mit Sicherheit nicht in diesem Bereich aufhält, was wiederum durch eine robotereigene, sichere Koordinatenbegrenzung gewährleistet sein kann. Solche situationsbezogenen Regeln für die Bewertung, ob eine sicherheitsgerichtete Reaktion erfolgen muss, müssen der System-Diagnoseeinheit 34 dann aber ebenfalls in einer mit dem Sicherheitskonzept abgestimmten Weise bekannt sein.

Die sicherheitsgerichtete Reaktion der Maschine 12 wird vorzugsweise über einen Abschaltdienst 54 ausgelöst. Das kann eine weitere Sicherheitsfunktionseinheit 32 sein, die vorzugsweise entgegen der Darstellung in die Systemüberwachung eingebunden sein kann. Der Abschaltdienst 54 arbeitet vorzugsweise invertiert, d.h. es wird ein positives Signal von der System-Diagnoseeinheit 34 erwartet und an die Maschine 12 weitergegeben, dass die Maschine 12 arbeiten darf. Damit wird automatisch ein Ausfall der System-Diagnoseeinheit 34 oder des Abschaltdienstes 54 aufgefangen.

Die Maschine wird von dem Abschaltdienst 54 trotz seines Namens nicht zwangsläufig abgeschaltet, das ist nur die drastischste Maßnahme. Je nach Fehler kann ein sicherer Zustand bereits durch ein Verlangsamen, eine Begrenzung der Geschwindigkeit und/oder des Arbeitsraums oder dergleichen erreicht werden. Das hat dann geringere Auswirkungen auf die Produktivität. Der Abschaltdienst 54 kann auch von einer der Logikeinheiten 28 angefordert werden, wenn dort durch Auswertung der Sensordaten eine Gefahrensituation erkannt wird. Ein entsprechender Pfeil wurde in Figur 5 der Übersicht halber weggelassen.

Figur 6 zeigt eine schematische Darstellung der Zustandsüberwachung 46 auf Basis der Zustandsnachrichten 50. Vorzugsweise werden Zustandsnachrichten 50 kontinuierlich oder regelmäßig in dem Sinne an die System-Diagnoseeinheit 34 übermittelt, dass spätestens nach einer festgelegten Dauer beispielsweise von einigen Millisekunden eine Zustandsnachricht 50 von jeder überwachten Logikeinheit 28 eingehen muss. Ein fester Zyklus oder Zeittakt ist dabei denkbar, aber nicht erforderlich, zeitliche Schwankungen innerhalb des Rahmens der festgelegten Dauer sind also möglich.

Die Logikeinheiten 28 führen bevorzugt vor dem Absenden einer Zustandsnachricht 50 eine Selbstdiagnose durch. Das geschieht nicht zwingend, eine Zustandsnachricht 50 kann ein reines Lebenszeichen oder die Weitergabe interner Zustände ohne vorherige Selbstdiagnose sein, oder die Selbstdiagnose wird seltener durchgeführt, als Zustandsnachrichten 50 gesendet werden. Die Selbstdiagnose überprüft beispielsweise die in ihrem Speicher abgelegten Daten und Programmbestandteile, die Verarbeitungsergebnisse und die Systemzeit. Entsprechend beinhalten die Zustandsnachrichten 50 Informationen über den internen Zustand der Logikeinheit 28 und geben Aufschluss darüber, ob die Logikeinheit in der Lage ist, ihre Aufgabe korrekt zu erfüllen, etwa ob die Logikeinheit 28 alle notwendigen Daten in ausreichender Zeit zur Verfügung hat. Zudem enthalten die Zustandsnachrichten 50 vorzugsweise die oben genannten Metadaten.

Die System-Diagnoseeinheit 34 interpretiert den Inhalt der Zustandsnachrichten 50 und ordnet dies den jeweiligen Logikeinheiten 28 zu. Die einzelnen Zustände der Logikeinheiten 28 werden zu einem Gesamtzustand der Sicherheitsvorrichtung 10 aus Sicherheitssicht kombiniert. Die System-Diagnoseeinheit 34 hat eine vorgegebene Erwartung, welcher Gesamtzustand in welcher Situation die Sicherheit gewährleistet. Zeigt der Vergleich mit dem aktuellen Gesamtzustand unter möglicher Berücksichtigung der bereits diskutierten Toleranzen und situationsbezogenen Anpassungen, dass diese Erwartung nicht erfüllt ist, so ist dies ein sicherheitsrelevanter Fehler. Es wird eine entsprechende Nachricht an den Abschaltdienst 54 gesendet, um die Maschine 12 in einen dem Fehler angemessenen sicheren Zustand zu überführen.

Figur 7 zeigt eine schematische Darstellung der Ausführungsüberwachung 48 auf Basis der Ausführungsnachrichten 52. Die erste Logikeinheit 28 innerhalb eines Dienstes erzeugt eine eindeutige Programmsequenzkennzeichnung, kurz Sequenz, die alle beteiligten Logikeinheiten 28 eines Dienstes bei ihrer Ausführung referenzieren. Die Sequenz wird den direkt nachfolgenden Logikeinheiten 28 nach Beendigung der jeweiligen Ausführung propagiert, so dass sich diese bei der Erstellung ihrer Ausführungsnachricht 52 darauf beziehen können. Eine Ausführungsnachricht 52 umfasst, vorzugsweise neben den oben genannten Metadaten, eine Startzeit und eine Dauer der jeweiligen Ausführung. Weitere mögliche Bestandteile einer Ausführungsnachricht 52 sind eine eindeutige Bezeichnung dessen, was ausgeführt wurde, und die Sequenz. Ausführungsnachrichten 52 werden vorzugsweise ereignisbasiert jeweils nach vollständiger Ausführung gesendet. Da häufig Sensordaten ausgewertet werden, die zyklisch bereitstehen, kann indirekt auch ein ereignisbasierter Nachrichtenstrom zyklisch oder regelmäßig im oben definierten Sinne werden.

Ein Aggregator 56 sammelt die Ausführungsnachrichten 52 und bringt die Ausführungen anhand der eindeutigen Programmsequenzkennzeichnung in eine logische und zeitliche Anordnung beziehungsweise in einen Ausführungsablauf. Somit beschreibt der Ausführungsablauf die tatsächlichen Ausführungen. Die System-Diagnoseeinheit 34 hat andererseits Zugriff auf eine Ausführungserwartung 58, d.h. einen erwarteten Ausführungsablauf. Diese Ausführungserwartung 58 ist eine Vorgabe, die typischerweise ein Sicherheitsexperte im Zusammenhang mit dem Sicherheitskonzept festgelegt hat, die aber noch von der System-Diagnoseeinheit 34 modifiziert werden kann. Sollte die System-Diagnoseeinheit 34 keinen Zugriff auf die Ausführungserwartung 58 haben, so ist das jedenfalls nach einer zeitlichen Toleranz ein sicherheitsrelevanter Fehler mit der Konsequenz, dass der Abschaltdienst 54 angefordert wird, um die Maschine 12 abzusichern. Aggregator 56 und Ausführungserwartung 58 sind separat dargestellt und vorzugsweise so implementiert, können aber alternativ als Teil der System-Diagnoseeinheit 34 aufgefasst werden.

Die System-Diagnoseeinheit 34 vergleicht nun im Rahmen der Ausführungsüberwachung 48 den von dem Aggregator 56 mitgeteilten Ausführungsablauf mit der Ausführungserwartung 58, um zeitliche und logische Fehler in der Bearbeitung einer Dienstanforderung zu erkennen. Bei Unstimmigkeiten können Schritte zur Stabilisierung eingeleitet werden, beziehungsweise es wird, sobald ein Fehler nicht mehr eindeutig beherrschbar ist, über den Abschaltdienst 54 die Maschine 12 abgesichert.

Einige Beispiele für überprüfte Aspekte der Ausführungsüberwachung 48 sind: Es fehlt eine Ausführung, um einen Dienst vollständig abzuarbeiten, es wurde eine unerwartete, zusätzliche Ausführung gemeldet, sei es eine unerwartete Mehrfachausführung einer am Dienst beteiligten Logikeinheit 28 oder eine Ausführung einer am Dienst nicht beteiligten Logikeinheit 28, eine Ausführungszeit ist zu kurz oder zu lang, und dies samt Quantifizierung zur Beurteilung, ob das schwerwiegend ist, die verstrichene Zeit zwischen Ausführungen von einzelnen Ausführungen einer Logikeinheit 28. Welche dieser Unstimmigkeiten sicherheitsrelevant sind, in welchem Rahmen und in welcher Situation sie noch toleriert werden können und welche angemessene Sicherungsmaßnahme jeweils eingeleitet wird, ist in der Ausführungserwartung 58 beziehungsweise der System-Diagnoseeinheit 34 hinterlegt.

Figur 8 zeigt eine gegenüberstellende Illustration der sicherheitstechnischen Überwachung in der virtuellen Welt und in der realen Welt. Bisher wurde unter Bezugnahme auf die Figuren 1 bis 7 eine Sicherheitsüberwachung in der realen Welt 60 beschrieben, wie in Figur 8 auf der rechten Seite nun in einem einfachen Symbol zusammengefasst. Dabei wird mindestens eine reale Maschine 12 anhand realer Sensordaten mindestens eines realen Sensors 14 überwacht. Vorzugsweise geschieht dies auf die besonders flexible beschriebene Weise unter Verwendung von Containern und deren Orchestrierung sowie einer vorteilhaften Zustands- und Ausführungsüberwachung.

Auf der linken Seite ist ebenfalls in einem einfachen Symbol zusammengefasst eine Simulation, Virtualisierung oder virtuelle Welt 62 gezeigt. Damit ist eine Nachbildung der realen Welt 60 unter Verwendung mindestens einer Simulationsumgebung gemeint, von denen einleitend einige eingeführt wurden. Die Simulation umfasst ein Maschinenmodell der Maschine 12 und ein Sensormodell des Sensors 14, es gibt also einen digitalen Zwilling zu der Maschine 12 und einen digitalen Zwilling zu dem Sensor 14. Es hängt von der Ausführungsform ab, in welchem Detailgrad die Maschine 12 und deren Maschinenbewegungen beziehungsweise der Sensor 14 und entsprechende synthetische Sensordaten in der Simulation nachgebildet werden. Ein sinnvoller Maßstab ist, dass die Lücke zwischen Realität und Virtualisierung keine sicherheitsrelevanten Verzerrungen einführt. In der praktischen Implementierung der Virtualisierung können die Konzepte aus der realen Welt 60 ganz oder teilweise übernommen werden, analog zu den Beschreibungen unter Bezugnahme auf die Figuren 1 bis 7. Es können also die synthetischen Sensordaten ausgewertet werden, und die Sicherheitsfunktionen, die das leisten, können containerisiert und die Container wiederum orchestriert werden. Zu beachten ist, dass der Begriff Sicherheitsfunktion nicht ganz identisch zu demjenigen einer (sicherheitsrelevanten) Logikeinheit 28 ist. In der virtuellen Welt 62 wird zusätzlich zu möglichen virtuellen Gegenstücken der Logikeinheiten 28 auch ein Container mit einer Roboter- oder sonstigen Maschinensimulation oder mit einer Sensorsimulation als Sicherheitsfunktion angesehen, da auf sicherheitsrelevante Fehler in solchen Simulationen ebenfalls reagiert werden muss. Insgesamt entsteht damit auf der linken Seite der virtuellen Welt 62 eine sichere Virtualisierung.

In dem Überlappungsbereich 64 in der Mitte der Figur 8 werden beispielsweise über eine Cloud, auch private Cloud, Nachrichten zwischen den Sicherheitsüberwachungen der realen Welt 60 und der virtuellen Welt 62 ausgetauscht. Das dient auch der Synchronisierung zwischen der vorzugsweise sicher orchestrierten realen Welt 60 und der ebenfalls vorzugsweise sicher orchestrierten virtuellen Welt 62. Es wird damit ein diversitäres zweikanaliges System gebildet. Vorgänge, Auswertungsergebnisse und dergleichen aus der realen Welt 60 und der virtuellen Welt 62 können miteinander zur Laufzeit verglichen werden.

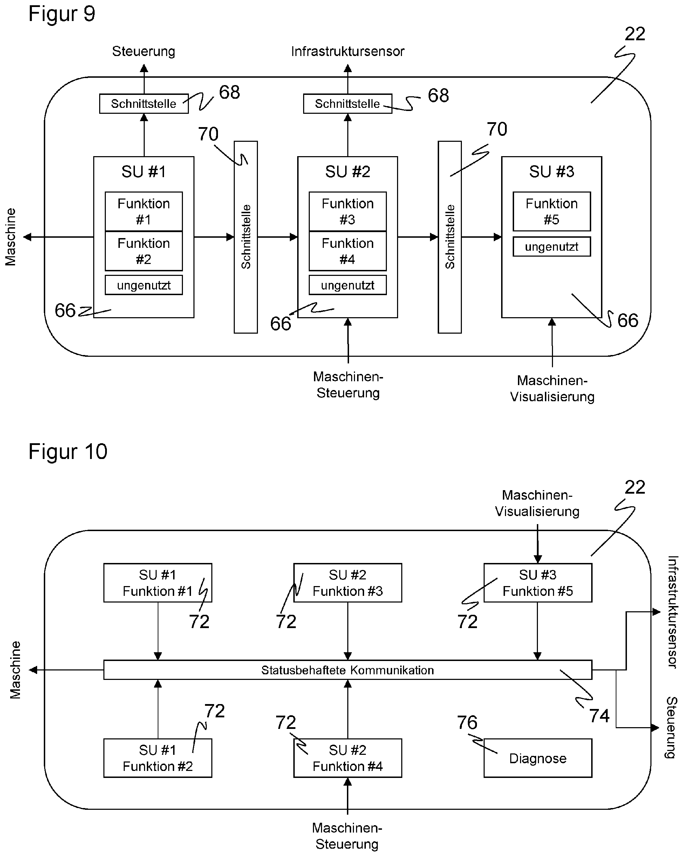

Figur 9 zeigt eine Darstellung einer Virtualisierung mindestens einer von mindestens einem Sensor 14 überwachten Maschine 12 mit monolithischer Implementierung von Funktionen #1...#5 in jeweiligen Simulationsumgebungen 66, die mit SU#1..SU#3 abgekürzt sind. Die hier betrachteten Funktionen #1... #5 sind Sicherheitsfunktionen, also für die sichere Überwachung relevant. Das kann im Sinne einer Logikeinheit 28 zur Auswertung von (synthetischen) Sensordaten oder einer Diagnose zu verstehen sein, aber auch erweitert eine Simulation einer Maschine 12 oder eines Sensors 14 bedeuten, denn ein fehlerhafter digitaler Zwilling hat ebenfalls eine Sicherheitsrelevanz. Zusätzlich kann es weitere Funktionen geben, die in gleicher oder anderer Weise in eine Simulationsumgebung eingebettet sind, aber nicht für die Sicherheit relevant sind und auf die deshalb nicht weiter eingegangen wird.

Beispielhaft können als Simulationsumgebungen 66 ROS, Unity und Omniverse verwendet werden. Einleitend wurde an diesem Beispiel erläutert, dass je nach Sicherheitsfunktion unterschiedliche Simulationsumgebungen 66 benötigt werden können, um jeweilige Vorteile zu bündeln. Ein Beispiel ist die Verwendung von ROS für die Einbindung älterer Hardware, aber von Unity für eine Visualisierung der Umgebung. In der Implementierung gemäß Figur 9 sind die Simulationsumgebungen 66 monolithische Strukturen, innerhalb derer das komplexe Zusammenspiel der Sicherheitsfunktionen und der davon verwendeten Funktionen der Simulationsumgebung nach außen intransparent bleibt. Das führt dann zu großen Schwierigkeiten, die Virtualisierungspipeline zu überwachen oder zu testen und somit die Virtualisierung sicher zu machen. Außerdem enthalten die Simulationsumgebungen 66 typischerweise unzählige Funktionen, die von den Sicherheitsfunktionen gar nicht genutzt werden und die daher unnötig Ressourcen verbrauchen ("software bloat").

Komplex und einer sicheren Überwachung schwer zugänglich ist auch die Kommunikation. Das betrifft Kommunikation nach außen, beispielsweise zu der Maschine 12, zu einer klassischen Steuerung oder zu Infrastruktursensoren. Dafür sind dann eigene Schnittstellen 68 oder Zusatzpakete erforderlich, um beispielsweise über Protokolle wie Profibus oder MQTT (Message Queuing Telemetry Transport) kommunizieren zu können. Ähnliches kann für Eingänge beispielsweise von einer Maschinensteuerung oder Maschinenvisualisierung gelten. Eine Kommunikation nach innen der Simulationsumgebungen 66 untereinander ist nur durch weitere Schnittstellen 70 möglich, die nur eine ganz bestimmte Peer-to-Peer-Brücke beispielsweise zwischen ROS und Unity oder zwischen Unity und Omniverse bilden. Solche Schnittstellen 70 sind gar nicht unbedingt verfügbar, jedenfalls nicht für neuere Simulationsumgebungen oder neuere Versionen davon.

Die monolithische sichere Virtualisierung gemäß Figur 9 fällt nicht in den Schutzbereich der Ansprüche. Sie hat noch gravierende Nachteile, deren erfindungsgemäße Überwindung durch Atomisierung in containerisierte Bausteine und deren Orchestrierung sogleich unter Bezugnahme auf die Figur 10 erläutert wird. Allerdings ist festzuhalten, dass es bisher im Stand der Technik gar keine sichere Virtualisierung gibt, auch nicht mit monolithischen Ansätzen wie in der Figur 9.

Figur 10 zeigt eine Darstellung einer sicheren Virtualisierung, in der die Sicherheitsfunktionen nun mit Hilfe von Containern atomisiert sind. Das bedeutet, dass weiterhin für jede Sicherheitsfunktion eine geeignete Simulationsumgebung 66 ausgesucht wird. Dann wird die Sicherheitsfunktion zusammen mit allen von der Sicherheitsfunktion benötigten Funktionen und Abhängigkeiten der ausgewählten Sicherheitsfunktion in einen Container verpackt. Dadurch entstehen atomisierte Sicherheitsfunktionen 72, die in Figur 10 jeweils als ein Paar der Funktion #1..#5 und der zugehörigen Simulationsumgebung SU#1...SU#3 dargestellt sind. Eine atomisierte Sicherheitsfunktion 72 ist somit ein Container, der sowohl die eigentliche Sicherheitsfunktion als auch die dafür erforderliche Simulationsumgebung 66 enthält, letztere aber vorzugsweise schlank, nämlich nur im benötigten Umfang. Die ungenutzten Funktionen der Figur 9 ("software bloat") können entfallen.

Den Containern der atomisierten Sicherheitsfunktionen 72 wird außerdem vorzugsweise die erforderliche Funktionalität hinzugefügt, um an einer statusbehafteten Kommunikation 74 teilzunehmen, also Nachrichten mit anderen atomisierten Sicherheitsfunktionen 72 oder der Außenwelt austauschen zu können. Auch diese Funktionalität bleibt schlank und ist an die Sicherheitsfunktion des Containers und dessen Kommunikationsbedürfnisse angepasst. Der Container kann also beispielsweise das Protokoll Profibus oder MQTT genau dann nutzen, wenn die Sicherheitsfunktion das erfordert. Beispiele einer geeigneten statusbehafteten Kommunikation 74 wie Apache Kafka sind einleitend genannt. Weiterhin wird den Containern vorzugsweise die erforderliche Funktionalität hinzugefügt, um deren Überwachung mit einem der zu den Figuren 5 bis 7 geschilderten oder einem anderen Mechanismus etwa durch eine Software wie Prometheus zu ermöglichen. Die entsprechende Diagnoseeinheit 76 ist nur schematisch eingezeichnet und kann möglicherweise abweichend von der Darstellung an der statusbehafteten Kommunikation 74 teilnehmen.

Die atomisierten Sicherheitsfunktionen 72 der virtuellen Welt 62 werden vorzugsweise in eine Orchestrierung beispielsweise mittels Kubernetes eingebunden, wie unter Bezugnahme auf die Figuren 1 bis 4 für die reale Welt 60 beschrieben, vorzugsweise einschließlich einer Diagnose und Überwachung insbesondere mittels Zustands- und Ausführungsnachrichten wie unter Bezugnahme auf die Figuren 5 bis 7 beschrieben.

Ein großer Vorteil der erfindungsgemäßen Lösung ist ihre Skalierbarkeit. Es können ohne weiteres auch große Industrieanlagen oder Logistikzentren mit hunderten oder noch mehr Fahrzeugen, Robotern oder sonstigen Maschinen und einer entsprechenden Anzahl von Sensoren überwacht und virtualisiert werden. Ebenso sind kleinere Anwendungen wie ein einzelner Roboterarm möglich, der von einem einzelnen oder wenigen Sensoren überwacht wird. Diese Skalierbarkeit ist zum einen auf die verwendeten Werkzeuge zurückzuführen, nämlich Container und deren Orchestrierung sowie die Mechanismen zur Erreichung von funktionaler Sicherheit insbesondere gemäß den Erläuterungen zu den Figuren 1 bis 7. Wirklich ausnutzen lässt sich das aber in der virtuellen Welt 62 erst in der einheitlichen Implementierung mit atomisierten Sicherheitsfunktionen 72 und vorzugsweise einer ebenso einheitlichen, gemeinsam genutzten statusbehafteten Kommunikation 74 gemäß Figur 10. Dabei ist die Komplexität auf das reduziert, das die atomisierten Sicherheitsfunktionen 72 tatsächlich benötigen, und überdies ist diese verbleibende Komplexität in den Containern verkapselt. Somit treten die Nachteile einer monolithischen Implementierung mit einzeln händisch anzupassenden oder gar erst zu entwickelnden Schnittstellen 68, 70 nicht länger auf. Die Vereinheitlichung ermöglicht es insbesondere, einzelne Komponenten und Sicherheitsfunktionen im Fehlerfalle neu zu starten, erforderlichenfalls zu replizieren, mit nahezu beliebig heterogenen Hardwarelandschaften zurechtzukommen und dort die Rechenlast geeignet zu verteilen sowie die Kommunikation zu vereinheitlichen und dabei im Einzelfall ein benötigtes Protokoll wie Profibus, MQTT, ROS; HTTP und dergleichen dennoch in einer der atomisierten Sicherheitsfunktionen 72 zur Verfügung zu stellen.

## Patentansprüche

1. Verfahren zur Absicherung mindestens einer Maschine (12), die von mindestens einem Sensor (14) überwacht wird, der Sensordaten zu der Maschine (12) erzeugt, wobei in einer Simulation Bewegungen eines Maschinenmodells der Maschine (12) durchgeführt und synthetische Sensordaten eines Sensormodells des Sensors (14) erzeugt werden und wobei in der Simulation mehrere Sicherheitsfunktionen (72) ausgeführt werden, in denen durch sicherheitsgerichtete Auswertung von zumindest Teilen der synthetischen Sensordaten beurteilt wird, ob eine gefährliche Situation vorliegt, um im Falle einer gefährlichen Situation ein Sicherheitssignal an die Maschine (12) zum Auslösen einer Sicherheitsreaktion auszugeben, wobei in der Sicherheitsfunktion (72) definiert ist, was eine gefährliche Situation ist,
**dadurch gekennzeichnet,**
**dass** die Sicherheitsfunktionen (72) containerisiert, also jeweils einzeln für sich zusammen mit den von der Sicherheitsfunktion (72) benötigten Funktionen und Abhängigkeiten in einem Container implementiert sind.

2. Verfahren nach Anspruch 1,
wobei das Sicherheitssignal ausgegeben wird, wenn in der Simulation eine gefährliche Situation erkannt wird.

3. Verfahren nach Anspruch 1 oder 2,
wobei mit mindestens einer realen Sicherheitsfunktion (28) die Sensordaten des Sensors (14) ausgewertet werden und wobei das Sicherheitssignal ausgegeben wird, wenn eine Sicherheitsfunktion (72) der Simulation und die reale Sicherheitsfunktion (28) zu inkonsistenten Ergebnissen kommen.

4. Verfahren nach einem der vorhergehenden Ansprüche,
wobei mit der jeweiligen Sicherheitsfunktion (72) in deren Container eine Simulationsumgebung (66) implementiert ist.

5. Verfahren nach einem der vorhergehenden Ansprüche,
wobei die Sicherheitsfunktionen (72) in jeweils einer von mehreren verschiedenen Simulationsumgebungen (66) ausgeführt werden.

6. Verfahren nach einem der vorhergehenden Ansprüche,
wobei die Sicherheitsfunktionen (72) über ein zustandsbehaftetes Nachrichtensystem (74) miteinander kommunizieren.

7. Verfahren nach Anspruch 6,
wobei die Funktionen zur Kommunikation über das zustandsbehaftete Kommunikationssystem (74) mit der jeweiligen Sicherheitsfunktion (72) in deren Container implementiert sind.

8. Verfahren nach einem der vorhergehenden Ansprüche,
wobei die Container mit den Sicherheitsfunktionen (72) in einer Ausführungsumgebung (22) mit mindestens einem Rechenknoten (26) von einem Container-Orchestrierungssystem verwaltet werden.

9. Verfahren nach Anspruch 8,
wobei die Ausführungsumgebung (22) auf mindestens einem Sensor (14), einer speicherprogrammierbaren Steuerung, einer Maschinensteuerung, einer Rechnervorrichtung in einem lokalen Netzwerk, einen Edge-Device und/oder in einer Cloud implementiert ist.

10. Verfahren nach einem der vorhergehenden Ansprüche,
wobei mindestens eine containerisierte Diagnosefunktion (34, 76) die Sicherheitsfunktionen (72) überwacht und wobei dazu die Sicherheitsfunktion (72) Zustandsnachrichten (50) und Ausführungsnachrichten (52) an die Diagnosefunktion (34, 76) übermittelt und die Diagnosefunktion (34, 76) in einer Zustandsüberwachung anhand von Zuständen aus den Zustandsnachrichten (50) und in einer Ausführungsüberwachung anhand eines Ausführungsablaufs aus den Ausführungsnachrichten (52) eine sicherheitsrelevante Fehlfunktion erkennt.

11. Verfahren nach einem der vorhergehenden Ansprüche,
wobei der mindestens eine Sensor (14) als optoelektronischer Sensor, insbesondere Lichtschranke, Lichttaster, Lichtgitter, Laserscanner, FMCW-LIDAR oder Kamera, als Ultraschallsensor, Trägheitssensor, kapazitiver Sensor, magnetischer Sensor, induktiver Sensor, UWB-Sensor oder als Prozessgrößensensor ausgebildet ist, insbesondere Temperatur-, Durchfluss-, Füllstand- oder Drucksensor, und wobei insbesondere eine Vielzahl gleicher oder unterschiedlicher Sensoren (14) vorgesehen ist.

12. Sicherheitsvorrichtung (14, 16, 22) zur Überwachung mindestens einer Maschine (12), wobei die Sicherheitsvorrichtung (14, 16, 22) mindestens einen Sensor (14) zum Erzeugen von Sensordaten zu der Maschine (12) sowie eine mindestens mittelbar mit der Maschine (12) verbundene Verarbeitungseinheit (16, 22) aufweist, in der ein Verfahren nach einem der vorhergehenden Ansprüche abläuft.

## Claims

1. A method for safeguarding at least one machine (12), which is monitored by at least one sensor (14) that generates sensor data regarding the machine (12), wherein, in a simulation, movements of a machine model of the machine (12) are performed and synthetic sensor data of a sensor model of the sensor (14) are generated, and wherein, in the simulation, multiple safety functions (72) are executed, in which it is assessed, through safety-oriented evaluation of at least parts of the synthetic sensor data, whether a dangerous situation is present, in order to output a safety signal to the machine (12) to trigger a safety response in the event of a dangerous situation, wherein the safety function (72) defines what constitutes a dangerous situation,
**characterized in that**
the safety functions (72) are containerized, i.e., each implemented individually along with the functions and dependencies required by the respective safety function (72) in a container.

2. The method according to claim 1,
wherein the safety signal is output when a dangerous situation is detected in the simulation.

3. The method according to claim 1 or 2,
wherein at least one real safety function (28) evaluates the sensor data of the sensor (14), and the safety signal is output if a safety function (72) of the simulation and the real safety function (28) produce inconsistent results.

4. The method according to any of the preceding claims,
wherein a simulation environment (66) is implemented in the container of the respective safety function (72).

5. The method according to any of the preceding claims,
wherein the safety functions (72) are executed in respective ones of several different simulation environments (66).

6. The method according to any of the preceding claims,
wherein the safety functions (72) communicate with each other via a stateful message system (74).

7. The method according to claim 6,
wherein the communication functions via the stateful communication system (74) are implemented with the respective safety function (72) in its container.

8. The method according to any of the preceding claims,
wherein the containers with the safety functions (72) are managed in an execution environment (22) with at least one computing node (26) by a container orchestration system.

9. The method according to claim 8,
wherein the execution environment (22) is implemented on at least one sensor (14), a programmable logic controller, a machine controller, a computing device in a local network, an edge device and/or in a cloud.

10. The method according to any of the preceding claims,
wherein at least one containerized diagnosis function (34, 76) monitors the safety functions (72), wherein the safety function (72) transmits state messages (50) and execution messages (52) to the diagnosis function (34, 76), and the diagnosis function (34, 76), during state monitoring based on the states from the state messages (50) and during execution monitoring based on the execution sequence from the execution messages (52), detects a safety-relevant malfunction.

11. The method according to any of the preceding claims,
wherein the at least one sensor (14) is configured as an optoelectronic sensor, in particular light barrier, photoelectric switch, light grid, laser scanner, FMCW-LIDAR or camera, as an ultrasonic sensor, inertial sensor, capacitive sensor, magnetic sensor, inductive sensor, UWB sensor or as a process variable sensor, in particular temperature, flow, fill level or pressure sensor, and wherein a plurality of identical or different sensors (14) is provided.

12. A safety device (14, 16, 22) for monitoring at least one machine (12), wherein the safety device (14, 16, 22) comprises at least one sensor (14) for generating sensor data regarding the machine (12) and a processing unit (16, 22) connected at least indirectly to the machine (12), in which a method according to any of the preceding claims is executed.

## Revendications

1. Procédé de sécurisation d'au moins une machine (12), surveillée par au moins un capteur (14) qui génère des données de capteur de la machine (12), dans lequel, dans une simulation, des mouvements d'un modèle de machine de la machine (12) sont exécutés et des données de capteur synthétiques d'un modèle de capteur du capteur (14) sont générées, et dans lequel, plusieurs fonctions de sécurité (72) sont exécutées dans la simulation, et dans lesquelles il est évalué, par une évaluation liée à la sécurité d'au moins une partie des données de capteur synthétiques, si une situation dangereuse est présente, afin d'émettre un signal de sécurité à la machine (12) pour déclencher une réaction de sécurité en cas de situation dangereuse, la fonction de sécurité (72) définissant ce qui constitue une situation dangereuse,
**caractérisé en ce que**
les fonctions de sécurité (72) sont conteneurisées, c'est-à-dire implémentées individuellement, chacune avec les fonctions et dépendances requises par la fonction de sécurité (72), dans un conteneur.

2. Procédé selon la revendication 1,
dans lequel le signal de sécurité est émis lorsqu'une situation dangereuse est détectée dans la simulation.

3. Procédé selon la revendication 1 ou 2,
dans lequel avec au moins une fonction de sécurité réelle (28), les données du capteur du capteur (14) sont évaluées et dans lequel le signal de sécurité est émis si une fonction de sécurité (72) de la simulation et la fonction de sécurité réelle (28) aboutissent à des résultats incohérents.

4. Procédé selon l'une des revendications précédentes,
dans lequel un environnement de simulation (66) est implémenté dans le conteneur de la fonction de sécurité (72) correspondante.

5. Procédé selon l'une des revendications précédentes,
dans lequel les fonctions de sécurité (72) sont exécutées chacune dans l'un des différents environnements de simulation (66).

6. Procédé selon l'une des revendications précédentes,
dans lequel les fonctions de sécurité (72) communiquent entre elles via un système de messagerie à états (74).

7. Procédé selon la revendication 6,
dans lequel les fonctions de communication via le système de communication à états (74) sont implémentées avec la fonction de sécurité (72) correspondante dans leurs conteneur.

8. Procédé selon l'une des revendications précédentes,
dans lequel les conteneurs svec les fonctions de sécurité (72) sont gérés dans un environnement d'exécution (22) avec au moins un noeud de calcul (26) par un système d'orchestration de conteneurs.

9. Procédé selon la revendication 8,
dans lequel l'environnement d'exécution (22) est implémenté sur au moins un capteur (14), une commande programmable, un contrôleur de machine, un dispositif informatique dans un réseau local, un dispositif périphérique et/ou dans un nuage.

10. Procédé selon l'une des revendications précédentes,
dans lequel au moins une fonction de diagnostic conteneurisée (34, 76) surveille les fonctions de sécurité (72), et dans lequel la fonction de sécurité (72) transmet des messages d'état (50) et des messages d'exécution (52) à la fonction de diagnostic (34, 76), et la fonction de diagnostic (34, 76) détecte un dysfonctionnement relatif à la sécurité, lors de la surveillance d'état à partir des états des messages d'état (50) et lors de la surveillance d'exécution à partir de la séquence d'exécution des messages d'exécution (52).

11. Procédé selon l'une des revendications précédentes,
dans lequel l'au moins un capteur (14) est configuré comme capteur optoélectronique, en particulier barrière lumineuse, détecteur optique, grille lumineuse, scanner laser, LIDAR FMCW ou caméra, comme capteur à ultrasons, capteur inertiel, capteur capacitif, capteur magnétique, capteur inductif, capteur UWB ou comme capteur de grandeur de procédé, en particulier capteur de température, de débit, de niveau ou de pression, et dans lequel une pluralité de capteurs (14) identiques ou différents est prévue.

12. Dispositif de sécurité (14, 16, 22) pour la surveillance d'au moins une machine (12), dans lequel le dispositif de sécurité (14, 16, 22) comprend au moins un capteur (14) pour générer des données de capteur de la machine (12) ainsi qu'une unité de traitement (16, 22) connectée au moins indirectement à la machine (12), dans laquelle un procédé selon l'une des revendications précédentes est exécuté.
